# EUROPEAN PATENT APPLICATION

(11) **EP 4 383 927 A1**
(43) Date of publication of application: **12.06.2024**
(21) Application number: 21952369.3
(22) Date of filing: 05.08.2021
(51) Int. Cl.: H04W 76/19

(54) **BEAM FAILURE PROCESSING METHOD AND APPARATUS, AND INFORMATION SENDING METHOD AND APPARATUS**

(71) Applicant: Fujitsu Limited, Kawasaki-shi, Kanagawa 211-8588 (JP)
(72) Inventor: JIA, Meiyi, Beijing 100022 (CN); CHEN, Zhe, Beijing 100022 (CN); ZHANG, Lei, Beijing 100022 (CN)
(74) Representative: Haseltine Lake Kempner LLP
(86) International application number: PCT/CN2021/111056
(87) International publication number: WO 2023/010490

(57) **Abstract**

Embodiments of this disclosure provide a beam failure processing method and apparatus, an information transmitting method and apparatus. The processing apparatus includes: receive configuration information transmitted by a network device, the configuration information configuring TRP-specific beam failure detection (BFD) and/or TRP-specific beam failure recovery (BFR) related to at least two transmission/reception points (TRPs) for the terminal equipment; and a first processing unit configured to, when a beam failure is detected or beam failure recovery is triggered on the at least two TRPs and the at least two TRPs are associated with the same cell, or when a beam failure is detected or beam failure recovery is triggered on a designated TRP, trigger BFR of a cell or not to trigger BFR of a cell or initiate a random access procedure.

## Description

### Technical Field

This disclosure relates to the field of communication technologies.

### Background

In a New Radio (NR) system, transmission and reception of beams are supported, and management of a plurality of beams is also supported. A terminal equipment may perform a beam failure detection (BFD) procedure and a beam failure recovery (BFR) procedure.

In 3GPP Rel-15/16, for each serving cell, radio resource control (RRC) may be used to configure a beam failure recovery procedure for a media access control (MAC) entity. When a beam failure is detected on a serving synchronization signal block (SSB)/channel state information reference signal (CSI-RS), a new SSB or CSI-RS is indicated to a serving network device (such as a gNB).

When an MAC protocol data unit (PDU) is transmitted by the terminal equipment to the network device and the MAC PDU includes a BFR MAC control element (CE) or a truncated BFR MAC CE carrying beam failure information of a secondary cell, the terminal equipment shall cancel all BFRs triggered for beam failure recovery of the secondary cell before the MAC PDU is assembled.

During the beam failure recovery procedure, the MAC entity performs the following operations:
if the beam failure recovery procedure determines that at least one BFR has been triggered and the BFR has not been cancelled, evaluation of its candidate beams has been completed as demanded;
if an uplink resource (a UL-SCH resource) is available for new transmission and a result of a logical channel prioritization (LCP) is that the uplink resource is able to accommodate the BFR MAC CE plus its subhead, it is indicated that a multiplexing and assembly procedure generates the BFR MAC CE;
if the uplink resource is available for new transmission and the result of the LCP is that the uplink resource is able to accommodate a truncated BFR MAC CE plus its subheader, it is indicated that the multiplexing and assembly procedure generates the truncated BFR MAC CE;
otherwise, triggering a scheduling request (SR) for each secondary cell where BFR has been triggered and has not been canceled having completed evaluation of its candidate beam as demanded.

Therefore, the beam failure information of the secondary cell may be carried by the BFR MAC CE or truncated BFR MAC CE, and is transmitted by the terminal equipment to the network device.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary of the Disclosure

However, it was found by the inventors that in operations of multiple transmit receive points (TRPs), if cell-specific BFD and/or BFR and TRP-specific BFD and/or BFR are configured simultaneously, a situation where detection results of the cell-specific BFD and TRP-specific BFD are different. For example, if TRP-specific BFs are detected but no cell-specific BFD is detected on all TRPs, the TRP-specific BFR may possibly not be successfully completed, thereby increasing service interruption. In addition, If the TRP-specific BFDBFR is/are configured only and the cell-specific BFDBFR is/are not configured, in a case where TRP-specific BF occurs in all TRPs, it is possible that the TRP-specific BFR is unable to be completed successfully, thereby increasing service interruption.

In order to solve at least one of the above problems, embodiments of this disclosure provide a beam failure processing method and an apparatus for the same, an information transmitting method and an apparatuses for the same.

According to an aspect of the embodiments of this disclosure, there is provided a beam failure processing apparatus, applicable to a terminal equipment, the apparatus including:
a first receiving unit configured to receive configuration information transmitted by a network device, the configuration information configuring TRP-specific beam failure detection (BFD) and/or TRP-specific beam failure recovery (BFR) related to at least two transmission/reception points (TRPs) for the terminal equipment; and
a first processing unit configured to, when a beam failure is detected or beam failure recovery is triggered on the at least two TRPs and the at least two TRPs are associated with the same cell, or when a beam failure is detected or beam failure recovery is triggered on a designated TRP, trigger BFR of a cell or not to trigger BFR of a cell or initiate a random access procedure.

According to another aspect of the embodiments of this disclosure, there is provided an information transmitting apparatus, applicable to a network device, the apparatus including:
a first transmitting unit configured to transmit configuration information to a terminal equipment,
wherein in the configuration information, the terminal equipment is configured with at least two BFD-RS sets and/or NBI-RS sets, or the configuration information comprises at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set and/or is associated with one NBI-RS set.

According to a further aspect of the embodiments of this disclosure, there is provided a communication system, including a terminal equipment and a network device,
wherein the terminal equipment receives configuration information transmitted by the network device, the configuration information configuring TRP-specific beam failure detection (BFD) and/or TRP-specific beam failure recovery (BFR) related to at least two transmission/reception points (TRPs) for the terminal equipment, and when a beam failure is detected or beam failure recovery is triggered on the at least two TRPs and the at least two TRPs are associated with the same cell, or when a beam failure is detected or beam failure recovery is triggered on a designated TRP, triggers BFR of a cell or does not trigger BFR of a cell or initiate a random access procedure.

An advantage of the embodiments of this disclosure exists in that when beam failure is detected or beam failure recovery is triggered on the at least two TRPs and the at least two TRPs are associated with the same cell, or when a beam failure is detected on a designated TRP,, BFR of a cell is triggered or is not triggered BFR or a random access procedure is initiated. Hence, failure of TRP-specific BFR may be avoided, and time of service interruption may be reduced.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/including/includes" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of an embodiment of this disclosure;
FIG. 2 is a schematic diagram of a multi-TRP scenario of the embodiment of this disclosure;
FIG. 3 is a schematic diagram of the beam failure processing method of an embodiment of this disclosure;
FIG. 4 is a schematic diagram of the beam failure processing method of an embodiment of this disclosure;
FIG. 5 is a schematic diagram of the beam failure processing method of an embodiment of this disclosure;
FIG. 6 is another schematic diagram of the beam failure processing method of an embodiment of this disclosure;
FIG. 7 is a further schematic diagram of the beam failure processing method of an embodiment of this disclosure;
FIG. 8 is still another schematic diagram of the beam failure processing method of an embodiment of this disclosure;
FIG. 9 is a schematic diagram of the information transmitting method of an embodiment of this disclosure;
FIG. 10 is a schematic diagram of the beam failure processing apparatus of an embodiment of this disclosure;
FIG. 11 is a schematic diagram of the beam failure processing apparatus of an embodiment of this disclosure;
FIG. 12 is a schematic diagram of the information transmitting apparatus of an embodiment of this disclosure;
FIG. 13 is a schematic diagram of the network device of an embodiment of this disclosure;
FIG. 14 is a schematic diagram of the terminal equipment of an embodiment of this disclosure; and
FIGs. 15 and 16 are schematic diagrams of an MAC CE format.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment, except otherwise specified.

Scenarios of the embodiments of this disclosure shall be described below by way of examples; however, this disclosure is not limited thereto.

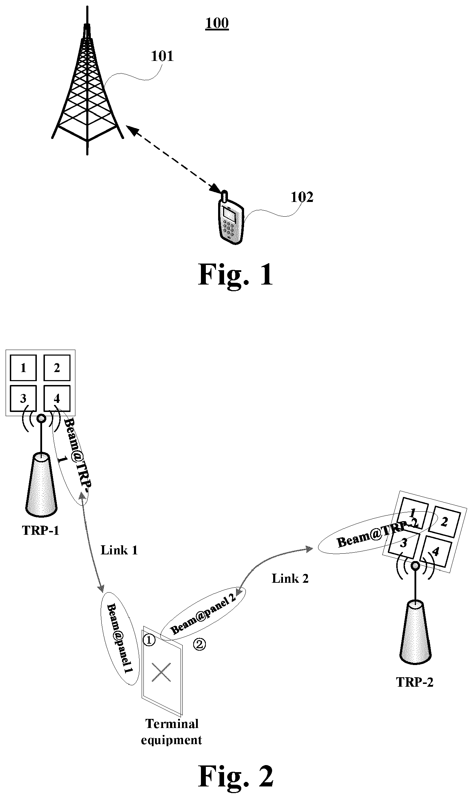

FIG. 1 is a schematic diagram of a communication system of this disclosure, in which a case where a terminal equipment and a network device are taken as examples is schematically shown. As shown in FIG. 1, a communication system 100 may include a network device 101 and a terminal equipment 102. For the sake of simplicity, an example having only one terminal equipment is schematically given in FIG. 1; however, the embodiments of this disclosure are not limited thereto, for example, there may be multiple terminal equipments.

In the embodiment of this disclosure, existing traffics or traffics that may be implemented in the future may be performed between the network device 101 and the terminal equipment 102. For example, such traffics may include but not limited to enhanced mobile broadband (eMBB), massive machine type communication (MTC), and ultra-reliable and low-latency communication (URLLC), etc.

In a beam failure detection (BFD) procedure in Rel-15/16, an MAC entity of a media access control (MAC) layer of the terminal equipment detects a cell-specific beam failure by calculating the number of beam failure instance indications provided by a lower layer (such as a physical layer) to the MAC entity.

For example, the beam failure detection procedure uses a UE variable *BFI_COUNTER.* The variable is a counter of the beam failure instance indications, which is initially set to be 0, and each serving cell has a BFI_ COUNTER. For each serving cell configured with beam failure detection, the MAC entity performs the following operations (triggering of cell-level/cell-specific beam failure recovery):
if a beam failure instance indication is received from the lower layer: starting or restarting a beam failure detection timer *beam FailureDetectionTimer,* and adding 1 to a terminal equipment variable *BFI_COUNTER;* in a case where *BFI_COUNTER* is greater than or equal to a maximum count value *beamFailureInstanceMaxCount* of the beam failure instances: if the serving cell is a secondary cell (SCell), triggering beam failure recovery (BFR) of the serving cell; otherwise, initiating a random access procedure on a special cell (SpCell); if *beamFailureDetectionTimer* expires, or if a higher layer reconfigures *beamFailureDetectionTimer* or *beamFailure InstanceMaxCount* or any reference signal used for beam failure detection of the serving cell, setting *BFI_COUNTER* to be 0.

Relevant scenarios of the embodiment of this disclosure shall be further described below. In the embodiment of this disclosure, a beam may be replaced with a reference signal (RS), which may be denoted by, for example, an SSB or a CSI-RS.

FIG. 2 is a schematic diagram of a multi-TRP scenario of the embodiment of this disclosure. A TRP may be a part of a network device (such as a gNB) receiving signals from a terminal equipment, or may be a part of a network device (gNB) transmitting signals to a terminal equipment. In addition, the TRP may also denote a set of downlink control information (DCI) or a set of reference signals, etc.

As shown in FIG. 2, in the scenario of multi-TRP operations, the terminal equipment may have a panel 1 and a panel 2; and a serving cell may schedule the terminal equipment from two TRPs, so as to provide better physical downlink shared channel (PDSCH) coverage, reliability and/or data rate.

For multi-TRP operations, there may be two different operating modes: single DCI and multi-DCI. For these two modes, control of uplink and downlink operations is performed by a physical layer and media access control (MAC) layer. In the single DCI mode, the terminal equipment is scheduled by two TRPs via the same DCI; and in the multi-DCI mode, the terminal equipment is scheduled by separate DCI of each TRP.

In TRP-specific beam failure detection, according to the study of Rel-17 feMIMO, for beam failure detection of multiple TRPs, independent BFD-RS configuration per TRP is supported. Here, each TRP is associated with a BFD-RS set, and each (downlink) BWP supports 2 BFD-RS sets. A total number of RSs in the 2 BFD-RS sets is a UE capability, and a maximum number of RSs in each set is 2 or a UE capability (1 is a possible value). At least one of explicit and implicit BFD-RS configurations is supported. For the explicit BFD-RS configuration, each BFD-RS set is explicitly configured. For each BFD-RS set, following beam failure detection criteria are used: the physical layer of the UE evaluates radio link quality of each BFD-RS set, and if hypothetical PDCCH BLERs of all BFD-RSs in a BFD-RS set are higher than a threshold, an index of the BFD-RS set is indicated to the higher layer every X milliseconds, where, X is a larger/largest one in a minimum period of the BFD-RSs in the set and 2 ms. In the MAC procedure, a TRP-specific BFD counter and a TRP-specific BFD timer are supported.

In TRP-specific beam failure recovery, according to studies of Rel-17 feMIMO, for the multi-TRP, simultaneous configuration of cell-specific BFR and TRP-specific BFR on different carrier CCs is supported. A BFRQ MAC CE, indices carrying failed CCs, a new candidate beam (if found) of a failed TRP/CC and whether a new candidate beam is found are supported, and a separate indication of a TRP failure is at least supported. For identification of a new beam, if a NBI (new beam identification)-RS set per TRP is configured, independent configuration of NBI RS per TRP is supported, and new beam identification and configuration standards identical to those in Rel-16 are supported, including L1-RSRP and thresholds. A one-to-one association between each BFD-RS set and an NBI-RS set is supported. For a beam failure recovery request (BFRQ) response, a gNB response identical to that in Rel-16 SCell BFR is at least supported, that is, DCI of a toggled new data indicator (NDI) schedules a HARQ process ID identical to that of a PUSCH carrying a BFRQ MAC CE.

In the embodiment of this disclosure, independent to the cell-specific BFDBFR procedure, the terminal equipment may detect a TRP-specific beam failure or trigger TRP-specific BFR.

As shown in FIG. 2, the network device provides services to the terminal equipment via TRP-1 and TRP-2, wherein link 1 between TRP-1 and the UE is in operation normally, but link 2 between TRP-2 and the UE is blocked. The two TRPs may belong to the same cell or different cells. When they belong to different cells, for example, one of them belongs to a serving cell and the other one belongs to a non-serving cell.

In multi-TRP operation, if cell-specific BFD and/or BFR and TRP-specific BFD and/or BFR are configured simultaneously, a situation where detection results of the cell-specific BFD and TRP-specific BFD are different may occur. For example, if TRP-specific BFs are detected but no cell-specific BF is detected on all TRPs, as TRP-specific BFs are detected on all TRPs, TRP-specific BFR is unable to be completed successfully, thereby increasing service interruption. In addition, if only TRP-specific BFDBFR is configured and cell-specific BFDBFR is not configured, in a case where TRP-specific BFs occur in all TRPs, as TRP-specific BFs are detected on all TRPs, TRP-specific BFR is unable to be completed successfully, thereby increasing service interruption.

Addressed to the above problems, the embodiment of this disclosure shall further be described below.

In the embodiment of this disclosure, the cell-specific may be understood as cell-level or all beams, which are in a granularity of cells; and TRP-specific may be understood as TRP-level or partial beams, which are in a granularity of TRPs. The cell-specific MAC CE may either be the BFR MAC CE in Rel-15/Rel-16 or the truncated BFR MAC CE in Rel-15/Rel-16. The terms "a beam failure is detected" and "beam failure recovery is triggered" or "beam failure indication is triggered" are interchangeable, the terms "a beam" and "a reference signal" are interchangeable, BFD/BFR denotes BFD and/or BFR, "TPR-specific BFDBFR" and "partial BFD/BFR" or "BFDBFR associated with a BFD-RS set" are interchangeable, "a TPR-specific beam failure" and "a partial beam failure" or "a beam failure associated with a BFD-RS set" are interchangeable, and "association with" and "belonging to" are interchangeable.

### Embodiment of a first aspect

The embodiment of this disclosure provides a beam failure processing method, which shall be described from a terminal equipment.

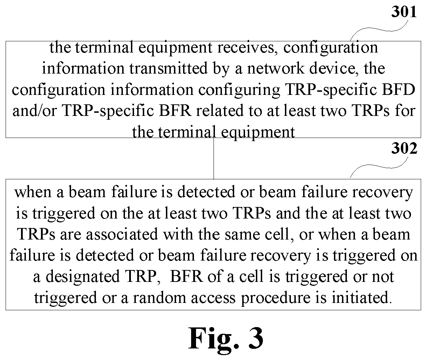

FIG. 3 is a schematic diagram of the beam failure processing method of the embodiment of this disclosure. As show in FIG. 3, the method includes:
301: the terminal equipment receives, configuration information transmitted by a network device, the configuration information configuring TRP-specific beam failure detection (BFD) and/or TRP-specific beam failure recovery (BFR) related to at least two transmission/reception points (TRPs) for the terminal equipment; and
302: when a beam failure is detected or beam failure recovery is triggered on the at least two TRPs and the at least two TRPs are associated with the same cell, or when a beam failure is detected or beam failure recovery is triggered on a designated TRP, BFR of a cell is triggered or not triggered or a random access procedure is initiated.

It should be noted that FIG. 3 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 3.

In some embodiments, the network device may configure the terminal equipment with TRP-specific BFDBFR related to at least two TRPs via configuration information. For example, TRP-specific BFD related to at least two TRPs is configured for the terminal equipment via the configuration information, and TRP-specific BFR related to at least two TRPs is configured for the terminal equipment via the configuration information.

In some embodiments, the configuration information is used to explicitly or implicitly configure BFDBFR reference signal sets, wherein when at least two BFDBFR reference signal sets are explicitly and/or implicitly configured, it indicates that the terminal equipment is configured with TRP-specific BFDBFR related to at least two TRPs, which shall be described below respectively.

In some embodiments, the configuration information may be represented as an information element *RadioLinkMonitoringConfig,* which may be included in BWP downlink dedicated information *BWP-DownlinkDedicated,* and transmitted via RRC signaling.

In some embodiments, that the configuration information configures TRP-specific BFD related at least two TRPs for the terminal equipment includes that in the configuration information, the terminal equipment is explicitly configured with at least two BFD-RS sets. For example, in this configuration information, failureDetectionResourcesToAddModList is included, which is used to configure multiple reference signals *RadioLinkMonitoringRS.* In this information element *RadioLinkMonitoringRS,* BFD-RS set (BFD-RS-SET) configuration information (such as a set index) is added, each BFD-RS set configuration information including a BFD-RS set index, etc. CondBFD indicates that a condition for existence of the information element is BFD, a purpose of this reference signal set is configured to be used for beamfail or both. This information element is optional; otherwise, this information element is default or the purpose of the reference signal set needs not to be taken into account. The reference signal set is suitable for both TRP-specific beam detection and TRP-specific radio link failure detection. For example, the configuration information may be denoted as follows in an abstract syntax flag ASN. 1 data format:

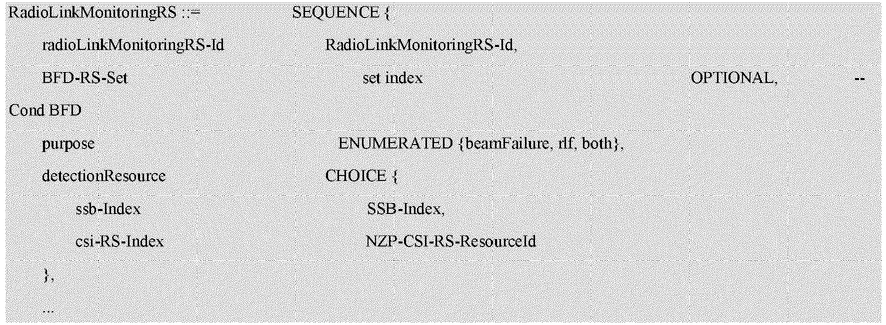

When the set indices are different in different *RadioLinkMonitoringRS*s, or when *RadioLinkMonitoringRS* includes two set indices of different values, it indicates that two BFD-RS sets are configured, and a value range of the set index includes at least two values. For example, a set index is 0 in one *RadioLinkMonitoringRS,* and a set index is 1 in the other *RadioLinkMonitoringRS,* indicating that two BFD-RS sets are configured, which shall not be enumerated herein any further. Or, the above BFD-RS set (BFD-RS-SET) configuration information (such as the set index) o may also be included in a newly-added IE. The newly-added IE is, for example, *beamFailureDetectionRS_TRP,* and at least includes the above BFD-RS set (BFD-RS-SET) configuration information (such as the set index) and a reference signal index, such as an SSB index and a CSI-RS index, which shall not be enumerated herein any further.

In some embodiments, that the configuration information configures TRP-specific BFD related to at least two TRPs for the terminal equipment includes that in the configuration information, the terminal equipment is implicitly configured with at least two BFD-RS sets, that is, at least two PCIs or at least two cell IDs or at least two (sets of) TCI states or SSBs related to at least two cells or at least two control resource pool indices are included in the configuration information, wherein a PCI or a cell ID or a (set of) TCI state(s) or SSB related to a cell or a control resource pool index is/are associated with a BFD-RS set. The PCI is a physical cell ID, such as being denoted by an information element *PhysCellld;* and the cell ID may be a cell ID of a serving cell or a cell ID of a non-serving cell, and is used to uniquely identify a cell in a public land mobile network (PLMN)/stand-alone non-public network (SNPN), such as being denoted by an information element *Cellldentity.*
A) For example, in the configuration information, at least two PCI or at least two cell IDs are included, wherein one BFD-RS is indicated/associated with one PCI or one cell ID, and one PCI or one cell ID implicitly denotes one BFD-RS set. Hence, the at least two physical cell identities (PCIs) or cell IDs may implicitly indicate that the BFD-RSs belong to at least two BFD-RS sets, that is, at least two BFD-RS sets are configured.
B) For example, in this configuration information, at least two (sets of) transmission configuration indicator (TCI) states are included, wherein one BFD-RS is indicated/associated with one (set of) TCI state(s), and one (set of) TCI state(s) implicitly denotes one BFD-RS set. Hence, the at least two (sets of) TCI states may implicitly indicate that the BFD-RSs belong to at least two BFD-RS sets, that is, at least two BFD-RS sets are configured.
C) For example, in the configuration information, SSBs related to at least two cells (cell defined SSBs, CD-SSBs) are included, wherein one BFD-RS is indicated/associated with one CD-SSB, and one CD-SSB implicitly denotes one BFD-RS set. Hence, the at least two CD-SSBs may implicitly indicate that the BFD-RSs belong to at least two BFD-RS sets, that is, at least two BFD-RS sets are configured.
D) For example, in the configuration information, at least two control resource pools (indices) are included, such as coresetPoolIndex-r16 or coresetPoolIndex-r17, wherein one BFD-RS is associated with one control resource pool (index), and one control resource pool index implicitly denotes one BFD-RS set. Hence, the at least two control resource pools (indices) may implicitly indicate that the BFD-RSs belong to at least two BFD-RS sets, that is, at least two BFD-RS sets are configured.
E) For example, in this configuration information, at least two control resource pools (indices) are included, such as coresetPoolIndex-r16 or coresetPoolIndex-r17, wherein one control resource pool (index) is associated with one PCI or one cell ID or one (set of) TCI state(s) or SSB related to one cell, and one PCI or one cell ID or one (set of) TCI state(s) or SSB related to one cell is associated with one BFD-RS set, and one control resource pool index implicitly denotes one BFD-RS set. Hence, the at least two control resource pools (indices) may implicitly indicate that the BFD-RSs belong to at least two BFD-RS sets, that is, at least two BFD-RS sets are configured.

The above A)-E) may be implemented separately or in a combined manner, and the embodiment of this disclosure is not limited thereto.

In addition, this configuration information may also include other information, such as a timer *beam FailureDetectionTimer,* and a beam failure instance maximum count value *beamFailurelnstanceMaxCount,* etc., which are configured per BFD-RS, and reference may be made to existing techniques for details, which shall not be repeated herein any further.

In some embodiments, the configuration information may be represented as an information element *BeamFailureRecoveryConfig* (for a special cell) or *BeamFailureRecoverySCellConfig* (for a secondary cell), which may be included in BWP uplink dedicated information *BWP-UplinkDedicated* or BWP downlink dedicated *informationBWP-DownlinkDedicated,* and is transmitted via RRC signaling.

In some embodiments, that the configuration information configures TRP-specific BFR related to at least two TRPs for the terminal equipment includes that in the configuration information, the terminal equipment is explicitly configured with at least two new beam identification (NBI)-RS sets. For example, for a special cell, a *candidateBeamRSList* is included in the configuration information, which is used to configure a plurality of reference signals and corresponding dedicated random access resources and/or *PR,4CH-ResourcePredictedBFR* information element of a dedicated random access preamble. NBI-RS set configuration information (such as a set index) is added to this information element, and each NBI-RS set configuration includes an NBI-RS set index, etc. For example, the configuration information may be denoted as follows in an abstract syntax flag ASN. 1 data format:

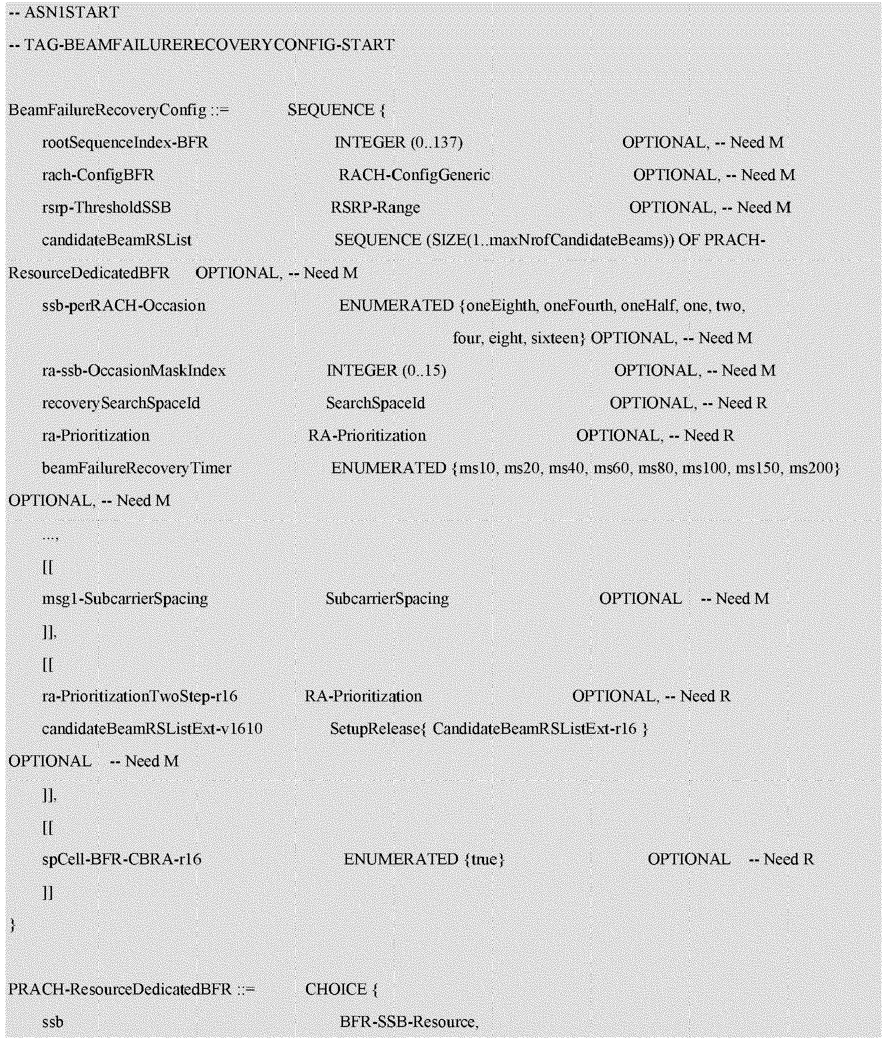

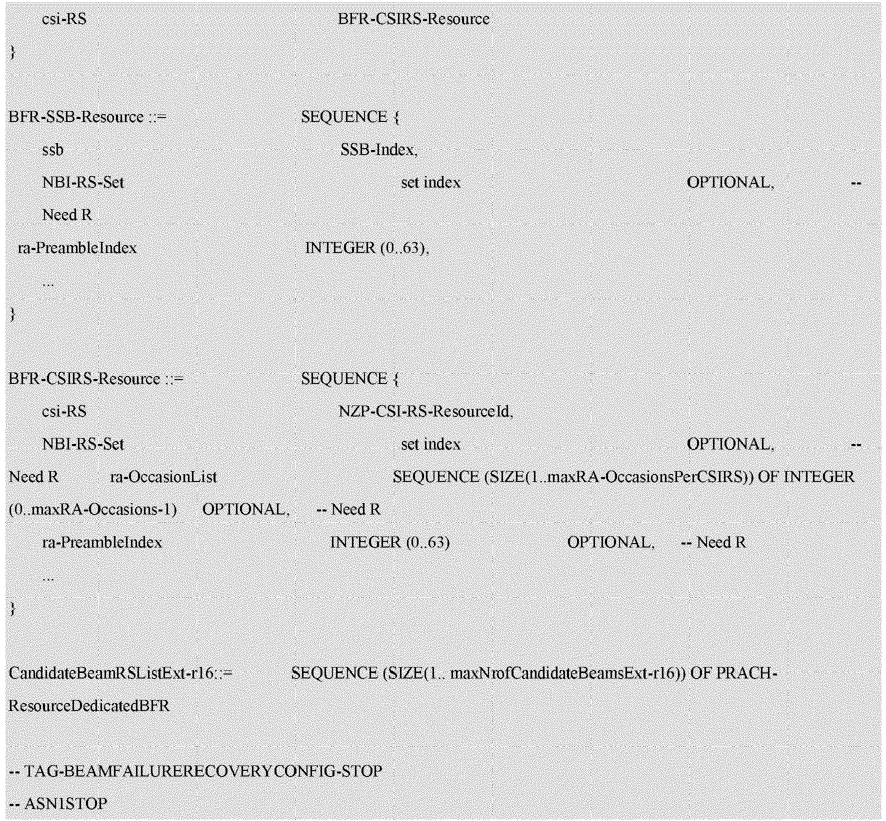

For a secondary cell, *candidateBeamRSSCellList* is included in the configuration information, which is used to configure a plurality of reference signal *candidateBeamRS* information elements. NBI-RS set configuration information (such as a set index) is added to this information element, and each NBI-RS set configuration includes an NBI-RS set index, etc. For example, the configuration information may be denoted as follows in an abstract syntax flag ASN. 1 data format:

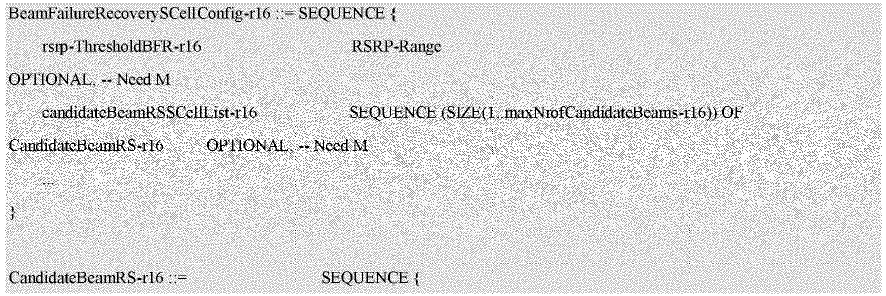

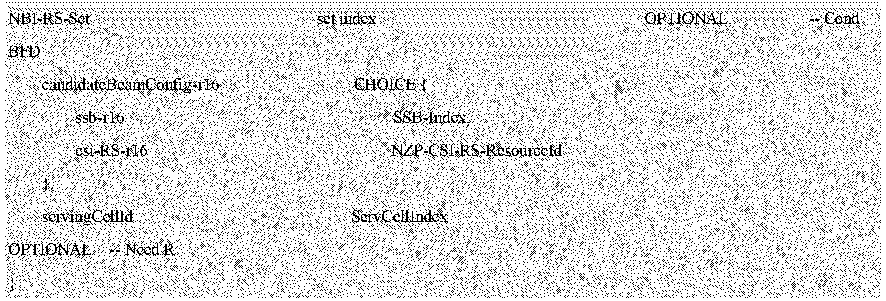

When set indices in different *candidateBeamRS*s are different, or when two set indices of different values are included in a *candidateBeamRS,* it indicates that at least two NBI-RS sets are configured, and a value range of the set index includes at least two values. For example, a set index is 0 in one *candidateBeamRS,* and a set index is 1 in the other *candidateBeamRS,* indicating that two NBI-RS sets are configured, which shall not be enumerated herein any further. Or, the above NBI-RS set (NBI-RS-SET) configuration information (such as the set index) may also be included in a newly-added IE. The newly-added IE is, for example, *beamFailureRecoveryRS_TRP,* and at least includes the above NBI-RS set (NBI-RS-SET) configuration information (such as the set index) and a reference signal index, such as an SSB index and a CSI-RS index, which shall not be enumerated herein any further.

In some embodiments, that the configuration information configures TRP-specific BFR related to at least two TRPs for the terminal equipment includes that in the configuration information, the terminal equipment is implicitly configured with at least two NBI-RS sets, that is, at least two PCIs or at least two cell IDs or at least two (sets of) TCI states or SSBs related to at least two cells or at least two control resource pool indices are included in the configuration information, wherein a PCI or a cell ID or a (set of) TCI state(s) or SSB related to a cell or a control resource pool index is/are associated with an NBI-RS set.
A) For example, in the configuration information, at least two PCI or at least two cell IDs are included, wherein one NBI-RS is indicated/associated with one PCI or one cell ID, and one PCI or one cell ID implicitly denotes one NBI-RS set. Hence, the at least two PCIs or cell IDs may implicitly indicate that the NBI-RSs belong to at least two NBI-RS sets, that is, at least two NBI-RS sets are configured.
B) For example, in this configuration information, at least two (sets of) TCI states are included, wherein one NBI-RS is indicated/associated with one (set of) TCI state(s), and one (set of) TCI state(s) implicitly denotes one NBI-RS set. Hence, the at least two (sets of) TCI states may implicitly indicate that the NBI-RSs belong to at least two NBI-RS sets, that is, at least two NBI-RS sets are configured.
C) For example, in the configuration information, SSBs related to at least two cells (cell defined SSBs, CD-SSBs) are included, wherein one NBI-RS is indicated/associated with one CD-SSB, and one CD-SSB implicitly denotes one NBI-RS set. Hence, the at least two CD-SSBs may implicitly indicate that the NBI-RSs belong to at least two NBI-RS sets, that is, at least two NBI-RS sets are configured.
D) For example, in the configuration information, at least two control resource pools (indices) are included, such as coresetPoolIndex-r16 or coresetPoolIndex-r17, wherein one NBI-RS is associated with one control resource pool (index), and one control resource pool index implicitly denotes one NBI-RS set. Hence, the at least two control resource pools (indices) may implicitly indicate that the NBI-RSs belong to at least two NBI-RS sets, that is, at least two NBI-RS sets are configured.
E) For example, in this configuration information, at least two control resource pools (indices) are included, such as coresetPoolIndex-r16 or coresetPoolIndex-r17, wherein one control resource pool (index) is associated with one PCI or one cell ID or one (set of) TCI state(s) or SSB related to one cell, and one PCI or one cell ID or one (set of) TCI state(s) or SSB related to one cell is associated with one NBI-RS set, and one control resource pool index implicitly denotes one NBI-RS set. Hence, the at least two control resource pools (indices) may implicitly indicate that the NBI-RSs belong to at least two NBI-RS sets, that is, at least two NBI-RS sets are configured.

The above A)-E) may be implemented separately or in a combined manner, and the embodiment of this disclosure is not limited thereto.

In addition, this configuration information may also include other information, such as a reference signal received power threshold *rsrp-ThresholdBFR,* and a serving cell ID *servingCe*llId, etc., which are configured per NBI-RS, and reference may be made to existing techniques for details, which shall not be repeated herein any further.

In some embodiments, when beam failure is detected or beam failure recovery is triggered on the at least two TRPs and the at least two TRPs are associated with the same cell, BFR of the cell is triggered or not triggered, or a random access procedure is initiated.

For example, that the at least two TRPs are associated with the same cell includes that at least two BFD-RS sets are associated with the same cell or at least two NBI-RS sets are associated with the same cell, and that the at least two BFD-RS sets are associated with the same cell includes that PCIs or cell IDs or TCI states or CD-SSBs with which the at least two BFD-RS sets are associated are identical, or control resource pools (indices) with which the at least two BFD-RS sets are associated are associated with the same cell (PCIs or cell IDs or TCI states or CD-SSBs with which the control resource pools (indices) are associated are identical), that is, the PCIs or cell IDs or TCI states or CD-SSBs with which the control resource pools associated with the at least two BFD-RS sets are associated are identical; and that the at least two NBI-RS sets are associated with the same cell includes that PCIs or cell IDs or TCI states or CD-SSBs with which the at least two BFD-RS sets are associated are identical, or control resource pools (indices) with which the at least two NBI-RS sets are associated are associated with the same cell (PCIs or cell IDs or TCI states or CD-SSBs with which the control resource pools (indices) are associated are identical), that is, the PCIs or cell IDs or TCI states or CD-SSBs with which the control resource pools associated with the at least two NBI-RS sets are associated are identical.

In some embodiments, that beam failure is detected or beam failure recovery is triggered on the at least two TRPs includes that beam failure is detected or beam failure recovery is triggered and is not canceled in the at least two BFD-RS sets, including that at least two BFD-RS sets simultaneously detect beam failures or trigger beam failure recovery, or non-simultaneously detect beam failures or trigger beam failure recovery (for example, when a beam failure is detected or beam failure recovery is triggered on a latter BFD-RS set, a detected beam failure is not recovered or a triggered BFR is not canceled on a former BFD-RS set where the beam failure is detected or the beam failure recovery is triggered).

In some embodiments, as described above, when the number of related indices of a BFD-RS set received (by a higher layer from a lower layer) at a first predetermined time T is greater than or equal to a configured threshold, the BFD-RS set detects a beam failure or triggers beam failure recovery. Therefore, that the at least two BFD-RS sets simultaneously detect beam failures or trigger beam failure recovery means that the number of related indices of each of the at least two BFD-RS sets received within the same first predetermined time T are all greater than or equal to the configured threshold, and times and thresholds to which different BFD-RS sets correspond are identical; and that the at least two BFD-RS sets non-simultaneously detect beam failures or trigger beam failure recovery means that for two BFD-RS sets (hereinafter referred to as a first BFD-RS set and a second BFD-RS set) in the at least two BFD-RS sets, the number of related indices of the first BFD-RS set received within first time T1 is greater than or equal to a configured first threshold, the first BFD-RS set detects a beam failure or triggers beam failure recovery, and the number of related indices of the second BFD-RS set received within second time T2 is greater than or equal to a configured second threshold, the second BFD-RS set detects a beam failure or triggers beam failure recovery, the times T1 and T2 are different, and the first threshold and the second threshold may be identical or different, wherein that T1 and T2 are different includes that lengths of T1 and T2 are different, and/or starting points of T1 and T2 are different, and/or ending points of T1 and T2 are different, and the embodiment of this disclosure is not limited thereto.

In some embodiments, the related index is an explicit index of the BFD-RS set, such as 0,1 or 1,2, and may also be an implicit index of the BFD-RS set, such as a PCI (index) or a TCI state (index) or an index of SSB related to a cell or a control resource pool index (such as *coresetPoolIndex-r16* or *coresetPoolIndex-r17*)*.*

In some embodiments, the above first predetermined times T, T1 and T2, the threshold, the first threshold and the second threshold may be included in the above configuration information. In addition, the receiving a related index of the BFD-RS set (by a higher layer from a lower layer) includes: evaluating radio link quality of each BFD-RS set by a physical layer the UE, and if hypothetical PDCCH BLERs of all BFD-RSs in a BFD-RS set are all higher than a third threshold (*rsrp-ThresholdBFR*)*,* indicating the related index of this BFD-RS set to the higher layer every X milliseconds; where, X is a larger/largest one in a minimum period of the BFD-RSs in the set and 2 ms.

In some embodiments, when a beam failure is detected or beam failure recovery is triggered on a designated TRP, BFR of a cell is triggered, or BFR of a cell is not triggered or a random access procedure is initiated.

In some embodiments, that a beam failure is detected or beam failure recovery is triggered on a designated TRP includes that the number of related indices of the BFD-RS set to which the designated TRP corresponds received within a second predetermined time is greater than or equal to the configured threshold. Meanings of the second predetermined time, the threshold and the related indices of the BFD-RS set are as described above, which shall not be repeated herein any further.

In some embodiments, the designated TRP may be a TRP associated with a serving cell, that is, the cell with which the TRP is associated is a serving cell, or the designated TRP is a TRP of a serving cell of the terminal equipment, for example, a PCI or a cell ID or a TCI state or a CD-SSB or a control resource pool with which the designated TRP is associated is for the serving cell, or a PCI or a cell ID or a TCI state or a CD-SSB associated with a control resource pool associated the designated TRP is for the serving cell.

In some embodiments, the designated TRP may be a TRP indicated by the network device, and the designated TRP triggers or does not trigger cell-specific BFR or initiates a random access procedure when a beam failure occurs. For example, the terminal equipment receives indication information transmitted by the network device, the indication information being used to indicate the designated TRP. This indication information indicates the designated TRP triggering or not triggering cell-specific BFR or initiating a random access procedure when a beam failure occurs, and may be carried by the above BWP dedicated information; however, the embodiment of this disclosure is not limited thereto. For example, the indication information may explicitly or implicitly specify the TRP. For example, the indication information may explicitly indicate the designated TRP by indicating the BFD-RS set (index) or NBI-RS set (index) associated with the TPR or by indicating the control resource pool index associated with the TRP, or it may also implicitly indicate the designated TRP, for example, if TRP-specific BFR configuration includes a TRP-specific random access resource and/or a random access preamble, it indicates that the TRP is the designated TRP.

In some embodiments, when beam failure is detected or beam failure recovery is triggered on the at least two TRPs and the at least two TRPs are associated with the same cell, or when a beam failure is detected or beam failure recovery is triggered on the designated TRP, whether a next behavior of the terminal equipment is to trigger BFR of the cell or not to trigger the BFR of the cell or initiate a random access procedure may be determined according to at least one of the number of carriers, a cell type and whether cell-specific BFD/BFR is configure, which shall be described below respectively.

In some embodiments, when the terminal equipment is configured with cell-specific BFD and/or BFR but no cell-specific beam failure is detected, BFR of the cell may be triggered, including generating a media access control (MAC) control element (CE), which is used to indicate that no cell-specific beam failure is detected, or indicate that no beam failure of the cell is detected, or indicate that no cell-specific beam failure recovery is triggered, or indicate that the beam failure recovery of the cell is not triggered.

In some embodiments, when the terminal equipment is configured with cell-specific BFD and/or BFR but no cell-specific beam failure is detected, a random access procedure may be initiated on the cell. When the random access procedure is initiated, a dedicated or common random access resource and/or a dedicated or common random access preamble may be used. When the dedicated random access resource and/or the dedicated random access preamble is/are configured in the configuration information, the dedicated random access resource and/or the dedicated random access preamble which are cell-specific or BWP specific or TRP-specific is/are used. When no dedicated random access resource and/or no dedicated random access preamble is/are configured, the common random access resource and/or the common random access preamble is/are used.

In some embodiments, if the terminal equipment is not configured with cell-specific BFD and/or BFR, a random access procedure may be initiated on the cell, and in initiating the random access procedure, a dedicated or common random access resource and/or a dedicated or common random access preamble is/are used. When the dedicated random access resource and/or the dedicated random access preamble is/are configured, the dedicated random access resource and/or thededicated random access preamble which is/are cell-specific or BWP specific or TRP-specific is/are used. When no dedicated random access resource and/or no dedicated random access preamble is/are configured, the common random access resource and/or the common random access preamble is/are used.

In some embodiments, when carrier aggregation is configured (i.e. the terminal equipment may operate on multiple carriers), and when cell-specific BFD and/or BFR is configured on the terminal equipment (such as a carrier where the terminal equipment is operating currently) but no cell-specific beam failure is detected, BFR of the cell may be triggered, including generating a media access control (MAC) control element (CE), which is used to indicate that no cell-specific beam failure is detected, or indicate that no beam failure of the cell is detected, or indicate that no cell-specific beam failure recovery is triggered, or indicate that the beam failure recovery of the cell is not triggered, the cell being a special cell.

In some embodiments, when carrier aggregation is configured (i.e. the terminal equipment may operate on multiple carriers), and when cell-specific BFD and/or BFR is configured on the terminal equipment (such as a carrier where the terminal equipment is operating currently) but no cell-specific beam failure is detected, a random access procedure may be initiated on the cell, and in initiating the random access procedure, a dedicated or common random access resource and/or a dedicated or common random access preamble is/are used. When the dedicated random access resource and/or the dedicated random access preamble is/are configured, the dedicated random access resource and/or the dedicated random access preamble which is/are cell-specific or BWP specific or TRP-specific is/are used. When no dedicated random access resource and/or no dedicated random access preamble is/are configured, the common random access resource and/or the common random access preamble is/are used, the cell being a special cell.

In some embodiments, when carrier aggregation is configured (i.e. the terminal equipment may operate on multiple carriers), and when cell-specific BFD and/or BFR is not configured on the terminal equipment (such as a carrier where the terminal equipment is operating currently), a random access procedure may be initiated on the cell, and in initiating the random access procedure, a dedicated or common random access resource and/or a dedicated or common random access preamble is/are used. When the dedicated random access resource and/or the dedicated random access preamble is/are configured, the dedicated random access resource and/or the dedicated random access preamble which is/are cell-specific or BWP specific or TRP-specific is/are used. When no dedicated random access resource and/or no dedicated random access preamble is/are configured, the common random access resource and/or the common random access preamble is/are used, the cell being a special cell.

In some embodiments, when carrier aggregation is configured (i.e. the terminal equipment may operate on multiple carriers), and when cell-specific BFD and/or BFR is configured on the terminal equipment (such as a carrier where the terminal equipment is operating currently) but no cell-specific beam failure is detected, BFR of the cell may be triggered, including generating a media access control (MAC) control element (CE), which is used to indicate that no cell-specific beam failure is detected, or indicate that no beam failure of the cell is detected, or indicate that no cell-specific beam failure recovery is triggered, or indicate that the beam failure recovery of the cell is not triggered, the cell being a secondary cell.

In some embodiments, when carrier aggregation is configured (i.e. the terminal equipment may operate on multiple carriers), and when no cell-specific BFD and/or BFR is/are configured on the terminal equipment (such as a carrier where the terminal equipment is operating currently), BFR of the cell may not be triggered, the cell being a secondary cell.

In some embodiments, when carrier aggregation is configured (i.e. the terminal equipment may operate on multiple carriers), and when no cell-specific BFD and/or BFR is/are configured on the terminal equipment (such as a carrier where the terminal equipment is operating currently), BFR of the cell may be triggered, including generating a media access control (MAC) control element (CE), which is used to indicate that a cell-specific beam failure is detected or not, or indicate that a beam failure of the cell is detected or not, or indicate that cell-specific beam failure recovery is triggered or not, or indicate that the beam failure recovery of the cell is triggered or not, the cell being a secondary cell.

In some embodiments, when carrier aggregation is configured (i.e. the terminal equipment may operate on multiple carriers), a random access procedure may be initiated on a special cell (e.g. when dual connectivity is configured, the special cell is the cell, i.e. a special cell in a cell group where the secondary cell is located) when the terminal equipment (such as a carrier where the terminal equipment is operating currently) is not configured with cell-specific BFD and/or BFR, and in initiating the random access procedure, a dedicated or common random access resource and/or a dedicated or common random access preamble is/are used. When the dedicated random access resource and/or the dedicated random access preamble is/are configured, the dedicated random access resource and/or the dedicated random access preamble which is/are cell-specific or BWP specific or TRP-specific is/are used. When no dedicated random access resource and/or no dedicated random access preamble is/are configured, the common random access resource and/or the common random access preamble is/are used, the cell being a secondary cell.

In some embodiments, reference may be made to existing *RadioLinkMonitoringRS* or *BeamFailureRecoveryConfig* (for a special cell) or *BeamFailureRecoverySCellConfig* (for a secondary cell) (excluding the above newly-added IE) for the above configured cell-specific BFD/BFR, and that a cell-specific BF is detected refers to a situation where a beam failure instance indication is received from the lower layer, and a beam failure detection timer *beam FailureDetectionTimer* is started or restarted; and a the terminal equipment variable *BFI_COUNTER* is added by 1; where, *BFI_COUNTER* is greater than or equal to a beam failure instance maximum count value *beamFailurelnstanceMaxCount.*

In some embodiments, the above generating a medium access control (MAC) control element (CE) is used to indicate that a cell-specific beam failure is detected or not, or indicate that a beam failure of a cell is detected or not, or indicate that cell-specific beam failure recovery is triggered or not, or indicate that beam failure recovery of a cell is triggered or not, that is, the MAC CE may include beam failure information, which is used to indicate whether a cell-specific beam failure is detected or not, and the terminal equipment transmits the MAC CE to the network device.

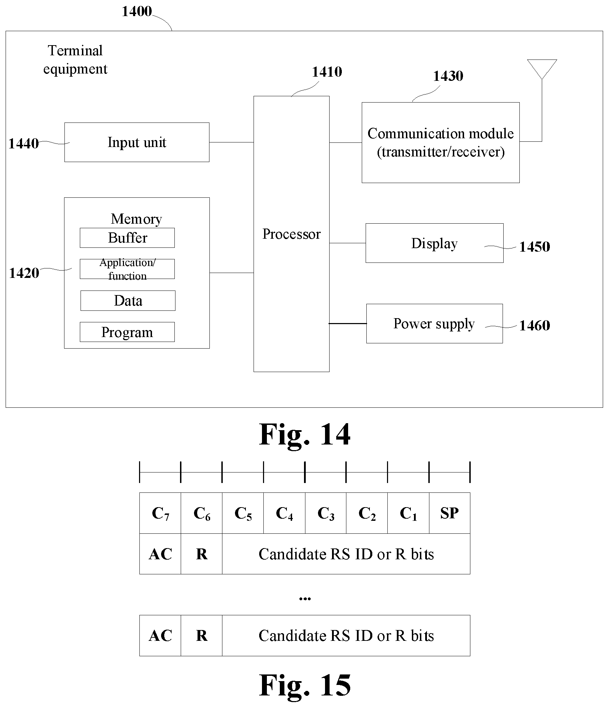

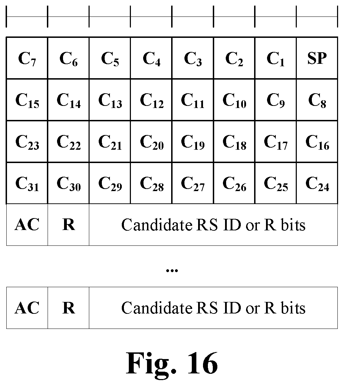

FIG. 15 is a schematic diagram of a BFR MAC CE or truncated BFR MAC CE in a first format (referred to as format 1), and FIG. 16 is a schematic diagram of a BFR MAC CE or truncated BFR MAC CE in a second format (referred to as format 2).

Specifically, for a BFR MAC CE, if the MAC entity detects a beam failure and a highest serving cell index *ServCellIndex* of a secondary cell where evaluation of candidate beams has been completed as demanded is less than 8, format 1 in FIG. 15 is used; otherwise, format 2 in FIG. 16 is used.

For a truncated BFR MAC CE, if the MAC entity detects a beam failure and a highest serving cell index *ServCellIndex* of a secondary cell where evaluation of candidate beams has been completed as demanded is less than 8, or if a special cell detects a beam failure, the special cell is included in a truncated BFR MAC CE and an LCP result is that a UL-SCH resource is unable to accommodate the truncated BFR MAC CE in format 2 in FIG. 16 plus its subhead, format 1 in FIG. 15 is used; otherwise, format 2 in FIG. 16 is used.

For example, fields of format 1 and format 2 are defined as follows:
For a BFR MAC CE, a Ci field indicates beam failure detection of a secondary cell of *ServCelllndex* i, whether evaluation of candidate beams as demanded is completed and possible existence of a byte including an AC field, the AC field indicating whether there exists a candidate RS ID field in this byte, the candidate RS ID field being set as an index of an SSB or a CSI-RS.

That the Ci field is set to be 1 indicates that the secondary cell of *ServCelllndex* i has detected a beam failure, evaluation of candidate beams as demanded has been completed and there exists a byte including an AC field. That the Ci field is set to be 0 indicates that the secondary cell of *ServCelllndex* i has not detected a beam failure or has detected a beam failure but evaluation of candidate beams as demanded has not been completed, and there exists no byte including an AC field. If present, the byte including the AC field exists in an ascending order of *ServCelllndex.*

For a truncated BFR MAC CE, a Ci field indicates beam failure detection of a secondary cell of *ServCelllndex* i, whether evaluation of candidate beams as demanded is completed and possible existence of a byte including an AC field, the AC field indicating whether there exists a candidate RS ID field in this byte, the candidate RS ID field being set as an index of an SSB or a CSI-RS.

That the Ci field is set to be 1 indicates that the secondary cell of *ServCelllndex* i has detected a beam failure, evaluation of candidate beams as demanded has been completed and there exists a byte including an AC field. That the Ci field is set to be 0 indicates that the secondary cell of *ServCelllndex* i has not detected a beam failure or has detected a beam failure but evaluation of candidate beams as demanded has not been completed, and there exists no byte including an AC field. If present, the byte including the AC field exists in an ascending order of *ServCellIndex.* The number of the byte including the AC field may be 0, and does not exceed a size of an available grant.

In addition, an MAC PDU transmits an MAC CE and this PDU includes a BFR MAC CE or truncated BFR MAC CE including beam failure information of a secondary cell, all BFR triggered for beam failure recovery of the secondary cell before assembly of the MAC PDU shall be cancelled. Reference may be made to existing techniques for a format and carrying mode of the MAC CE, which shall not be described herein any further, and the embodiment of this disclosure is not limited thereto.

In some embodiments, the method may further include (not shown):
the terminal equipment receives, DCI transmitted by the network device, the DCI including a toggled NDI, and cancels the triggered BFR and/or stops the ongoing random access procedure when the DCI schedules an HARQ process ID identical to a PUSCH carrying a BFRQ MAC CE.

In some embodiments, the BFRQ MAC CE includes information on cell-specific beam failure detection and/or beam failure recovery, and/or TRP-specific beam failure detection and/or beam failure recovery.

In some embodiments, the BFRQ MAC CE is the media access control (MAC) control element (CE) generated when the BFR of the cell is triggered as described above, and a format thereof is as shown in FIG. 15 or 16, which shall not be repeated herein any further.

In some embodiments, the DCI includes an NDI field, which is used to indicate whether the scheduled PDSCH is new transmission or retransmission. Each HARQ process ID is associated with an NDI, and the toggled NDI indicates that the PDSCH scheduled by the DCI is new transmission. When the HARQ process ID associated with the toggled NDI (determined by the terminal equipment according to the DCI) is identical to an HARQ process ID of a PUSCH carrying the BFRQ MAC CE, the triggered BFR is canceled and/or the ongoing random access procedure is stopped, wherein reference may be made to existing techniques for a method for determining the HARQ process ID, which shall not be described herein any further. As the HARQ process ID with which the toggled NDI (determined by the terminal equipment according to the DCI) is associated is identical to the HARQ process ID of the PUSCH carrying the BFRQ MAC CE, it indicates that the PUSCH carrying the BFRQ MAC CE previously transmitted by the terminal equipment has been correctly received by the network device, that is, the network device has already learned that the terminal equipment needs to perform beam-related processing. Therefore, cancelling the triggered BFR may avoid performing unnecessary BFR, thereby avoiding resource waste and service interruption. And furthermore, stopping the ongoing random access procedure may avoid performing unnecessary random access procedures, thereby avoiding resource waste and service interruption.

In some embodiments, the DCI is associated with the cell, and cyclic redundancy check (CRC) of the DCI is scrambled by a radio network temporary identifier of the cell.

In some embodiments, the DCI is associated with an other cell, and cyclic redundancy check (CRC) of the DCI is scrambled by a radio network temporary identifier of the other cell. In the configuration information, a PCI or a cell ID or a TCI state or a CD-SSB of the other cell is included, the PCI or cell ID or TCI state or CD-SSB being associated with a BFD-RS set, or the PCI or TCI state or CD-SSB being associated with an NBI-RS set, or, a control resource pool index used by other cell is included, the control resource pool index being associated with a BFD-RS set or an NBI-RS set. The configuration information is as described above, which shall not be repeated herein any further.

In some embodiments, the above detecting a beam failure or triggering beam failure recovery and 302 are performed by the MAC entity, wherein the MAC entity includes a beam failure detection procedure, a beam failure recovery procedure, and a multiplexing and assembly entity (hereinafter referred to as a multiplexing and assembly procedure), etc. In addition, the lower layer of the embodiment of this disclosure is, for example, a physical layer, an antenna element, and measurement procedure, etc. Reference may be made to relevant techniques for specific concepts and definitions of the layers and entities, which shall not be repeated in the embodiments of this disclosure.

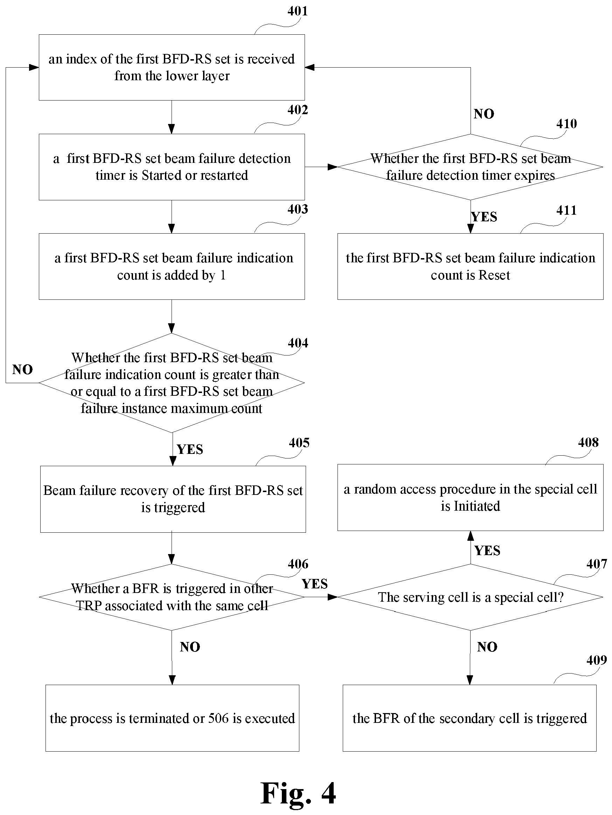

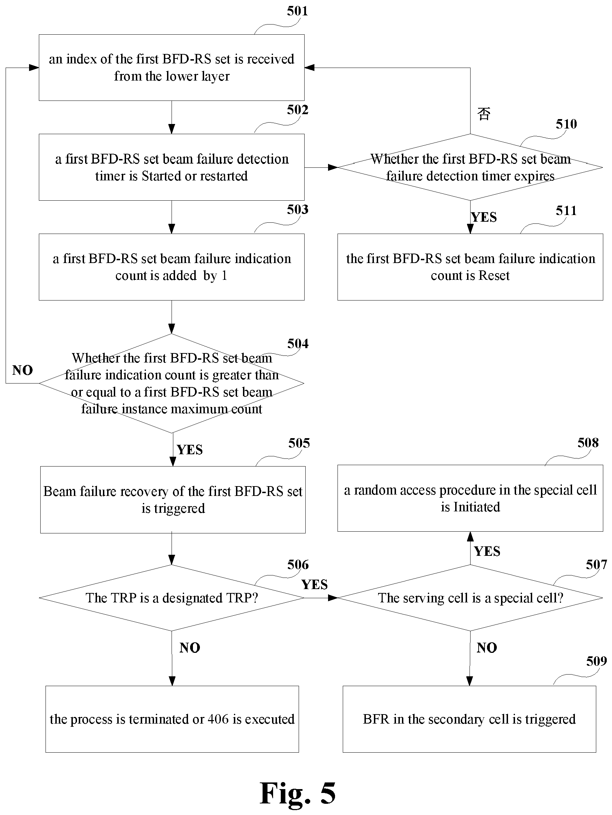

FIGs. 4 and 5 are schematic diagrams of the beam failure processing method of this disclosure. In the embodiments shown in FIGs. 4 and 5, a cell with which the TRP is associated and/or whether a TRP is a designated TRP is determined first, and then whether the cell is a special cell is determined, which shall be described below. As shown in FIG. 4, operations of the MAC entity include:
401: a (related) index of the BFD-RS set is received from the lower layer;
402: a first BFD-RS set-specific beam failure detection timer associated with a TRP is started or restarted;
403: a first BFD-RS set beam failure indication count (such as *BFI_COUNTER*) associated with the timer is added by 1;
404: it is determined whether the first BFD-RS set beam failure indication count is greater than or equal to a first BFD-RS set beam failure instance maximum count (e.g. *beamFailureInstanceMaxCount*), and turns back to 401 if a result of determination is no;
405: in a case where the first BFD-RS set beam failure indication count is greater than or equal to the first BFD-RS set beam failure instance maximum count (e.g. *beamFailurelnstanceMaxCount*)*,* it determines that a beam failure is detected in the first BFD-RS set associated with the TRP or that beam failure recovery (BFR) of the first BFD-RS set is triggered;
406: it is determined whether a beam failure occurs or BFR is triggered in other TRP associated with the same cell, a determination process being similar to that in 401-405 and being not going to be repeated herein any further, and executes 407 if a result of determination is yes, otherwise, terminates the process;
407: it is determined whether the serving cell is a special cell;
408: when the serving cell is a special cell, a random access procedure in the special cell is initiated; and
409: when the serving cell is a secondary cell, the BFR of the secondary cell is triggered.

As shown in FIG. 4, the operations of the MAC entity further include:
410: it is determined whether the first BFD-RS set beam failure detection timer (e.g. *beamFailureDetectionTimer*) expires, and turns back to 401 if a result of determination is no; and
411: when the first BFD-RS set beam failure detection timer expires, the first BFD-RS set beam failure indication count is reset, or the first BFD-RS set beam failure indication count is set to be 0.

As shown in FIG. 5, operations of the MAC entity include operations 501-505 and 507-511 identical to operations 401-405 and 407-411, and only differences from FIG. 4 shall be described below. In 506, whether the TRP is the designated TRP is determined, and executing 507 if a result of determination is yes, otherwise, terminating the process.

In some embodiments, the methods in FIGs. 4 and 5 may be implemented separately or in a combined manner. When they are implemented in a combined manner, for example, in FIG. 4, when a result of determination of 406 is that no beam failure occurs or no BFR is triggered in the other TRP associated with the same cell, or when a beam failure occurs or BFR is triggered in the other TRP but the other TRP and the TRP are associated with different cells, 506 is executed; or, in FIG. 5, when a result of determination of 506 is that the TRP is not the designated TRP, 406 is executed.

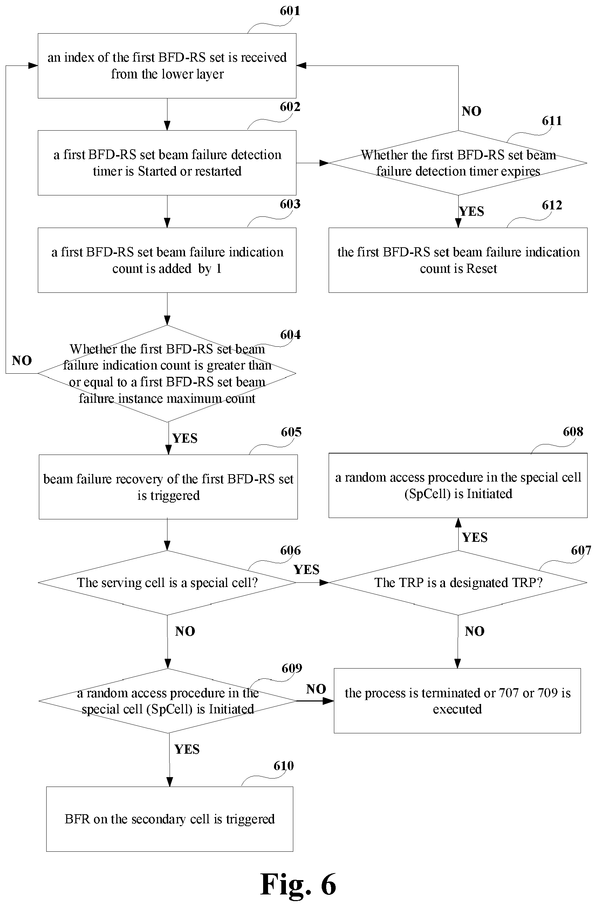

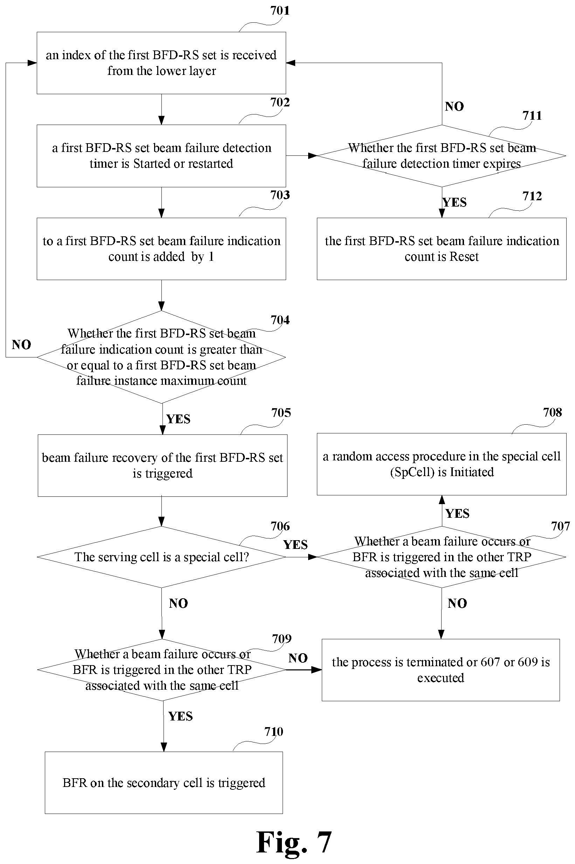

FIGs. 6 and 7 are schematic diagrams of the beam failure processing method of this disclosure. In the embodiments shown in FIGs. 6 and 7, whether the cell is a special cell is first determined, and then a cell associated with the TRP and/or whether the TRP is the designated TRP is/are determined, which shall be described below respectively. As shown in FIG. 6, the operations of the MAC entity include operations 601-605 and 611-612 identical to operations 401-405 and 410-411, and only differences from FIG. 4 shall be described below. In 606, it is determined whether the serving cell is a special cell; in 607, when the serving cell is not a special cell, whether the TRP is a designated TRP is determined; in 608, when the TRP is a designated TRP, a random access procedure is initiated on the special cell (such as a special cell in a cell group where the serving cell, i.e. the secondary cell, is located), otherwise, the process is terminated; in 609, when the serving cell is a special cell, whether the TRP is a designated TRP is determined; and in 610, when the TRP is a designated TRP, BFR is triggered on the secondary cell; otherwise, the process is terminated or 709 is executed.

As shown in FIG. 7, the operations of the MAC entity include operations 701-705 and 711-712 identical to operations 401-405 and 410-411, and only differences from FIG. 4 shall be described below. In 706, it is determined whether the serving cell is a special cell; in 707, when the serving cell is not a special cell, it is determined whether a beam failure occurs or BFR is triggered in the other TRP associated with the same cell (a process of determination is similar to that in 701-705, and shall not be repeated herein any further); in 708, when the beam failure occurs or the BFR is triggered in the other TRP associated with the same cell, a random access procedure is initiated on the special cell (such as a special cell in a cell group where the serving cell, i.e. the secondary cell, is located); otherwise, the process is terminated; in 709, when the serving cell is a special cell, it is determined whether a beam failure occurs or BFR is triggered in the other TRP associated with the same cell; and in 710, when the beam failure occurs or the BFR is triggered in the other TRP associated with the same cell, BFR is triggered on the secondary cell; otherwise, the process is terminated.

In some embodiments, the methods in FIGs. 6 and 7 may be implemented separately or in a combined manner. When they are implemented in a combined manner, for example, in FIG. 6, 707 is executed when a result of determination of 607 is that the TRP is not a designated TRP, and 709 is executed when a result of determination of 609 is that the TRP is not a designated TRP; or, in FIG. 7, when a result of determination of 707 is that no beam failure occurs or BFR is not triggered in the other TRP associated with the same cell or when a beam failure occurs or BFR is triggered in the other TRP but the other TRP and the TRP are associated with different cells, 607 is executed; or, when a result of determination of 709 is that no beam failure occurs or BFR is not triggered in the other TRP associated with the same cell or a beam failure occurs or BFR is triggered in the other TRP but the other TRP and the TRP are associated with different cells, 609 is executed.

It should be noted that FIGs. 3-7 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIGs. 3-7.

It can be seen from the above embodiment that when beam failure is detected or beam failure recovery is triggered on the at least two TRPs and the at least two TRPs are associated with the same cell, or when a beam failure is detected on a designated TRP, BFR of a cell is triggered or is not triggered BFR or a random access procedure is initiated. Hence, failure of TRP-specific BFR may be avoided, and time of service interruption may be reduced.

### Embodiment of a second aspect

The embodiment of this disclosure provides a beam failure processing method, which shall be described from a terminal equipment.

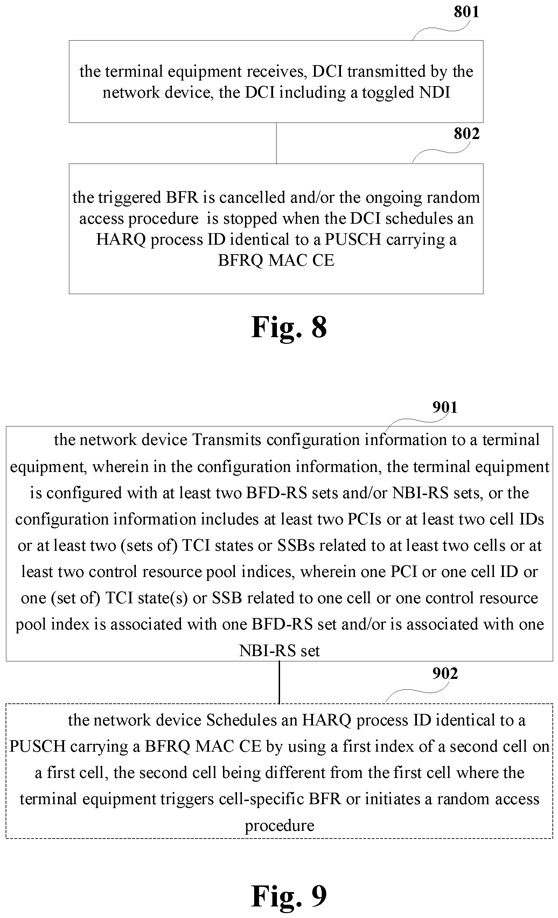

FIG. 8 is a schematic diagram of the beam failure processing method of the embodiment of this disclosure. As show in FIG. 8, the method includes:
801: the terminal equipment receives, DCI transmitted by the network device, the DCI including a toggled NDI; and
802: the triggered BFR is cancelled and/or the ongoing random access procedure is stopped when the DCI schedules an HARQ process ID identical to a PUSCH carrying a BFRQ MAC CE.

In some embodiments, the BFRQ MAC CE includes information on cell-specific beam failure detection and/or beam failure recovery, and/or TRP-specific beam failure detection and/or beam failure recovery.

In some embodiments, the DCI is associated with the cell, and cyclic redundancy check (CRC) of the DCI is scrambled by a radio network temporary identifier of the cell.

In some embodiments, the DCI is associated with other cell, and cyclic redundancy check (CRC) of the DCI is scrambled by a radio network temporary identifier of the other cell. In the configuration information, a PCI or a cell ID or a TCI state or a CD-SSB of the other cell is included, the PCI or cell ID or TCI state or CD-SSB being associated with a BFD-RS set, or the PCI or TCI state or CD-SSB being associated with an NBI-RS set, or, a control resource pool index used by other cell is included, the control resource pool index being associated with a BFD-RS set or an NBI-RS set. The configuration information is as described above, which shall not be repeated herein any further.

In some embodiments, reference may be made to the embodiment of the first aspect for implementations of 801-802, which shall not be repeated herein any further.

It can be seen from the above embodiment that the HARQ process ID (determined by the terminal equipment according to the DCI) associated with the toggled NDI is identical to the HARQ process ID of the PUSCH carrying the BFRQ MAC CE, which indicates that the PUSCH carrying the BFRQ MAC CE previously transmitted by the terminal equipment has been correctly received by the network device, that is, the network device has learnt that the terminal equipment needs to perform beam-related processing. Therefore, canceling the triggered BFR may avoid performing unnecessary BFR, and may avoid resource waste and service interruption. And furthermore, stopping the ongoing random access procedure may avoid performing unnecessary random access procedure, and may avoid resource waste and service interruption.

### Embodiment of a third aspect

The embodiment of this disclosure provides an information transmitting method, which shall be described from a network device side.

FIG. 9 is a schematic diagram of the information transmitting method of the embodiment of this disclosure. As shown in FIG. 9, the method includes:
901: the network device transmits configuration information to a terminal equipment,
wherein in the configuration information, the terminal equipment is configured with at least two BFD-RS sets and/or NBI-RS sets, or the configuration information includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set and/or is associated with one NBI-RS set. If the configuration information includes at least two control resource pool indices and one of them is associated with one BFD-RS set and/or is associated with one NBI-RS set, the control resource pool index is further associated with one PCI or one cell ID or one (set of) TCI state(s) or SSB related to one cell.

In some embodiments, 901 corresponds to 301 in the embodiment of the first aspect, and reference may be made to the embodiment of the first aspect for an implementation of the configuration information, which shall not be described herein any further.

In some embodiments, the configuration information further includes indication information, the indication information being used to indicate a TRP triggering cell-specific BFR and/or initiating a random access procedure when a beam failure occurs or beam failure recovery is triggered. Reference may be made to the embodiment of the first aspect for the indication information, which shall not be described herein any further.

In some embodiments, the method further includes (optional):
902: the network device schedules an HARQ process ID identical to a PUSCH carrying a BFRQ MAC CE by using a first index of a second cell on a first cell, the second cell being different from the first cell where the terminal equipment triggers cell-specific BFR or initiates a random access procedure. The first index is a cell ID (such as a PCI) or an identifier assigned by the cell for the terminal equipment (such as a cell radio network temporary identifier, C-RNTI).

In some embodiments, the BFRQ MAC CE includes information on cell-specific beam failure detection and/or beam failure recovery, and/or TRP-specific beam failure detection and/or beam failure recovery.

It can be seen from the above embodiment that the network device configures TRP-specific BFDBFR related to at least two TRPs for the terminal equipment, so that the terminal equipment triggers BFR of the cell or does not trigger BFR of the cell or initiates a random access procedure when it detects beam failures on the at least two TRPs and the at least two TRPs are associated with the same cell or when a beam failure is detected on the designated TRP. Hence, unsuccessful TRP-specific BFR may be avoided and service interruption time may be reduced.

### Embodiment of a fourth aspect

The embodiment of this disclosure provides a beam failure processing apparatus. The apparatus may be, for example, a terminal equipment, or may also be one or more components or assemblies configured in the terminal equipment, with contents identical to those in the embodiment of the first aspect being not going to be described herein any further.

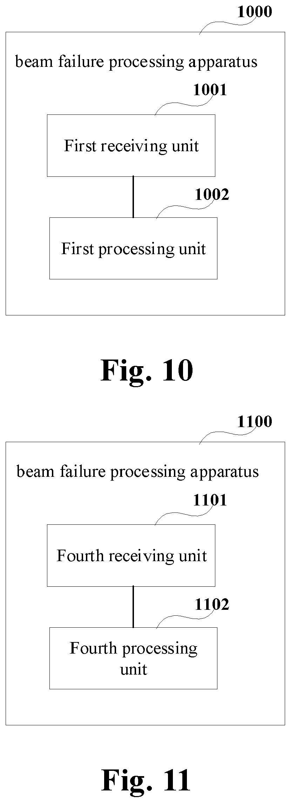

FIG. 10 is a schematic diagram of the beam failure processing apparatus of the embodiment of this disclosure. As shown in FIG. 10, a beam failure processing apparatus 1000 includes:
a first receiving unit 1001 configured to receive configuration information transmitted by a network device, the configuration information configuring TRP-specific beam failure detection (BFD) and/or TRP-specific beam failure recovery (BFR) related to at least two transmission/reception points (TRPs) for the terminal equipment; and
a first processing unit 1002 configured to, when a beam failure is detected or beam failure recovery is triggered on the at least two TRPs and the at least two TRPs are associated with the same cell, or when a beam failure is detected or beam failure recovery is triggered on a designated TRP, trigger BFR of a cell or not to trigger BFR of a cell or initiate a random access procedure.

In some embodiments, reference may be made to 301-302 in the embodiment of the first aspect for implementations of the first receiving unit 1001 and the first processing unit 1002, with repeated parts being not going to be described herein any further.

In some embodiments, when the terminal equipment is configured with cell-specific BFD and/or cell-specific BFR but a cell-specific beam failure is not detected, the first processing unit triggers BFR of the cell or initiates a random access procedure on the cell.

In some embodiments, when the terminal equipment is not configured with cell-specific BFD and/or cell-specific BFR, the first processing unit initiates a random access procedure on the cell.

In some embodiments, when carrier aggregation is configured and the terminal equipment is configured with cell-specific BFD and/or cell-specific BFR but a cell-specific beam failure is not detected, the first processing unit triggers BFR of the cell or initiates a random access procedure on the cell, the cell being a special cell.

In some embodiments, when carrier aggregation is configured and the terminal equipment is not configured with cell-specific BFD and/or cell-specific BFR, the first processing unit initiates a random access procedure on the cell, the cell being a special cell.

In some embodiments, when carrier aggregation is configured and the terminal equipment is configured with cell-specific BFD and/or cell-specific BFR but a cell-specific beam failure is not detected, the first processing unit triggers BFR of the cell, the cell being a secondary cell.

In some embodiments, when carrier aggregation is configured and the terminal equipment is not configured with cell-specific BFD and/or cell-specific BFR, the first processing unit does not trigger BFR of the cell or triggers BFR of the cell or initiates a random access procedure on a special cell, the cell being a secondary cell.

In some embodiments, when dual connectivity is configured, the special cell is a special cell of a cell set where the secondary cell is located.

In some embodiments, the first processing unit is further configured to generate a media access control (MAC) control element (CE), which is used to indicate that no cell-specific beam failure is detected.

In some embodiments, the first processing unit is further configured to generate a media access control (MAC) control element (CE), which is used to indicate that a cell-specific beam failure is detected or not.

In some embodiments, in initiating a random access procedure, the first processing unit uses a dedicated or common random access resource and/or a dedicated or common random access preamble.

In some embodiments, the dedicated random access resource and/or the dedicated random access preamble is/are cell-specific or BWP-specific or TRP-specific.

In some embodiments, that the configuration information configures TRP-specific BFD related to the at least two TRPs for the terminal equipment includes in the configuration information, the terminal equipment being configured with at least two BFD-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set.

In some embodiments, that the configuration information configures TRP-specific BFR related to the at least two TRPs for the terminal equipment includes: in the configuration information, the terminal equipment being configured with at least two NBI-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one NBI-RS set.

In some embodiments, that the at least two TRPs are associated with the same cell includes that at least two BFD-RS sets are associated with the same cell or at least two NBI-RS sets are associated with the same cell.

In some embodiments, that the at least two BFD-RS sets are associated with the same cell includes that PCIs or cell IDs or TCI states or CD-SSBs with which the at least two BFD-RS sets are associated are identical, or the PCIs or cell IDs or TCI states or CD-SSBs with which the control resource pools associated with the at least two BFD-RSs are associated are identical.

In some embodiments, that the at least two NBI-RS sets are associated with the same cell includes that PCIs or cell IDs or TCI states or CD-SSBs with which the at least two NBI-RSs are associated are identical, or the PCIs or cell IDs or TCI states or CD-SSBs with which the control resource pools associated with the at least two NBI-RSs are associated are identical.

In some embodiments, the apparatus further includes (optional, not shown):
a first detecting unit, wherein that the first detecting unit detects beam failure or triggers beam failure recovery on the at least two TRPs includes: that the first detecting unit detects beam failure or triggers beam failure recovery simultaneously on the at least two BFD-RS sets, wherein the number of related indices of each of the at least two BFD-RS sets received within a first predetermined time is greater than or equal to a configured threshold.

In some embodiments, the apparatus further includes (optional, not shown):
a second detecting unit, wherein that the second detecting unit detects beam failure or triggers beam failure recovery on the at least two TRPs comprises: that the second detecting unit detects the beam failure or triggers beam failure recovery non-simultaneously on the at least two BFD-RS sets, wherein when a beam failure is detected or beam failure recovery is triggered on a latter BFD-RS set, a detected beam failure is not recovered or a triggered BFR is not cancelled on a former BFD-RS set where the beam failure is detected or the beam failure recovery is triggered.

In some embodiments, that the second detecting unit determines that the beam failure is non-simultaneously detected or beam failure recovery is triggered on the at least two BFD-RS sets includes that for a first BFD-RS set and a second BFD-RS set in the at least two BFD-RS sets, the number of related indices of the first BFD-RS set received within first time is greater than or equal to a configured first threshold, and the number of related indices of the second BFD-RS set received within second time is greater than or equal to a configured second threshold, the first time and the second time being different.

In some embodiments, the apparatus further includes (optional, not shown):
a third detecting unit, wherein the third detecting unit detects a beam failure on the designated TRP includes that the number of related indices of the BFD-RS set to which the designated TRP corresponds received within the second predetermined time is greater than or equal to the configured threshold.

In some embodiments, the related index is an index of the BFD-RS set or an index of the PCI or cell ID or TCI state, or an index of SSB related to a cell or a control resource pool index.

In some embodiments, the designated TRP is a TRP of a serving cell of the terminal equipment.

In some embodiments, that the designated TRP is a TRP of a serving cell of the terminal equipment includes that a PCI or a cell ID or a TCI state or a CD-SSB or a control resource pool with which the designated TRP is associated is for the serving cell, or a PCI or a cell ID or a TCI state or a CD-SSB associated with a control resource pool associated the designated TRP is for the serving cell.

In some embodiments, the apparatus further includes (optional, not shown):
a second receiving unit configured to receive indication information transmitted by the network device, the indication information being used to indicate the designated TRP.

In some embodiments, the apparatus further includes (optional, not shown):
a third receiving unit configured to receive DCI transmitted by the network device, the DCI including a toggled NDI; and
a second processing unit configured to cancel the triggered BFR and/or stop the ongoing random access procedure when DCI of the toggled NDI schedules an HARQ process ID identical to a PUSCH carrying a BFRQ MAC CE.

In some embodiments, the BFRQ MAC CE includes information on cell-specific beam failure detection and/or beam failure recovery, and/or TRP-specific beam failure detection and/or beam failure recovery.

In some embodiments, the DCI is associated with the cell or is associated with an other cell.

In some embodiments, in the configuration information, a PCI or a cell ID or a TCI state or a CD-SSB of the other cell is included, the PCI or cell ID or TCI state or CD-SSB being associated with a BFD-RS set, or the PCI or TCI state or CD-SSB being associated with an NBI-RS set, or, a control resource pool index used by other cell is included, the control resource pool index being associated with a BFD-RS set or an NBI-RS set.

In some embodiments, the configuration information includes the PCI or cell ID or TCI state or CD-SSB of the other cell, wherein the PCI or cell ID or TCI state or CD-SSB is associated with a BFD-RS set, or the PCI or cell ID or TCI state or CD-SSB is associated with an NBI-RS set, or includes the control resource pool index used by the other cell, the control resource pool index is associated with either a BFD-RS set or an NBI-RS set.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the beam failure processing apparatus 1000 may further include other components or modules, and reference may be made to related techniques for particulars of these components or modules.

Furthermore, for the sake of simplicity, connection relationships between the components or modules or signal profiles thereof are only illustrated in FIG. 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that when beam failures are detected or beam failure recovery is triggered on the at least two TRPs and the at least two TRPs are associated with the same cell, or when a beam failure is detected on a designated TRP, BFR of a cell is triggered or is not triggered BFR or a random access procedure is initiated. Hence, failure of TRP-specific BFR may be avoided, and time of service interruption may be reduced.

### Embodiment of a fifth aspect

The embodiment of this disclosure provides a beam failure processing apparatus. The apparatus may be, for example, a terminal equipment, or may also be one or more components or assemblies configured in the terminal equipment, with contents identical to those in the embodiment of the second aspect being not going to be described herein any further.

FIG. 11 is a schematic diagram of the beam failure processing apparatus of the embodiment of this disclosure. As shown in FIG. 11, a beam failure processing apparatus 1100 includes:
a fourth receiving unit 1101 configured to receive DCI transmitted by a network device, the DCI including a toggled NDI; and
a fourth processing unit 1102 configured to cancel the triggered BFR and/or stop the ongoing random access procedure when the DCI schedules an HARQ process ID identical to a PUSCH carrying a BFRQ MAC CE.

In some embodiments, reference may be made to 801-802 in the embodiment of the second aspect for implementations of the fourth receiving unit 1101 and the fourth processing unit 1102, with repeated parts being not going to be described herein any further.

In some embodiments, the BFRQ MAC CE includes information on cell-specific beam failure detection and/or beam failure recovery, and/or TRP-specific beam failure detection and/or beam failure recovery.

In some embodiments, the DCI is associated with the cell, or is associated with an other cell.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the beam failure processing apparatus 1100 may further include other components or modules, and reference may be made to related techniques for particulars of these components or modules.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the HARQ process ID (determined by the terminal equipment according to the DCI) associated with the toggled NDI is identical to the HARQ process ID of the PUSCH carrying the BFRQ MAC CE, which indicates that the PUSCH carrying the BFRQ MAC CE previously transmitted by the terminal equipment has been correctly received by the network device, that is, the network device has learnt that the terminal equipment needs to perform beam-related processing. Therefore, canceling the triggered BFR may avoid performing unnecessary BFR, and may avoid resource waste and service interruption. And furthermore, stopping the ongoing random access procedure may avoid performing unnecessary random access procedure, and may avoid resource waste and service interruption.

### Embodiment of a sixth aspect

The embodiment of this disclosure provides an information transmitting apparatus. The apparatus may be, for example, a network device, or may also be one or more components or assemblies configured in the network device, with contents identical to those in the embodiment of the third aspect being not going to be described herein any further.

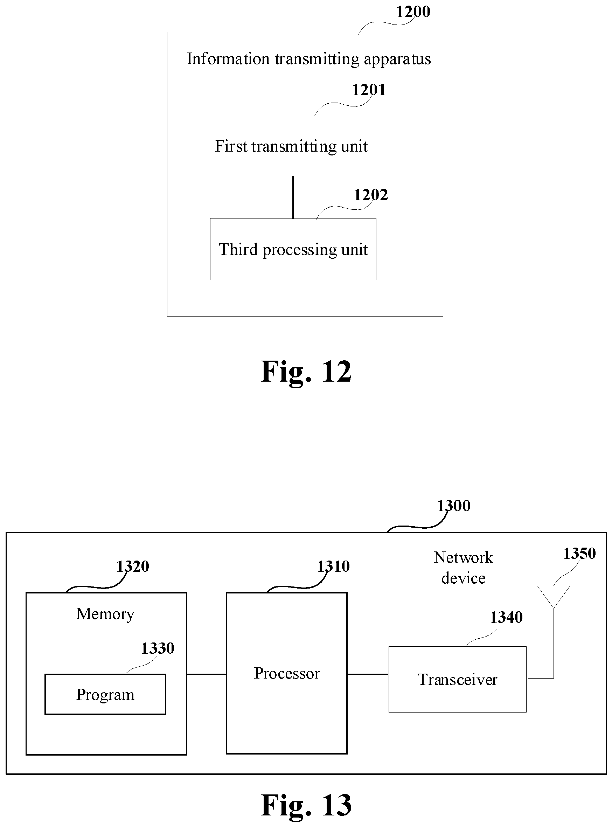

FIG. 12 is a schematic diagram of the information transmitting apparatus of the embodiment of this disclosure. As shown in FIG. 12, an information transmitting apparatus 1200 includes:
a first transmitting unit 1201 configured to transmit configuration information to a terminal equipment,
wherein in the configuration information, the terminal equipment is configured with at least two BFD-RS sets and/or NBI-RS sets, or the configuration information comprises at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set and/or is associated with one NBI-RS set.

In some embodiments, the configuration information further includes indication information, the indication information being used to indicate a TRP triggering cell-specific BFR and/or initiating a random access procedure when a beam failure occurs or beam failure recovery is triggered.

In some embodiments, the apparatus further includes (optional, not shown):
a third processing unit 1202 configured to schedule an HARQ process ID identical to a PUSCH carrying a BFRQ MAC CE by using a first index of a second cell on a first cell, the second cell being different from the first cell where the terminal equipment triggers cell-specific BFR or initiates a random access procedure.

In some embodiments, the BFRQ MAC CE includes information on cell-specific beam failure detection and/or beam failure recovery, and/or TRP-specific beam failure detection and/or beam failure recovery.

In some embodiments, the first index is a cell ID or an identifier assigned by the cell for the terminal equipment.

In some embodiments, reference may be made to 901-902 in the embodiment of the fourth aspect for implementations of the first transmitting unit 1201 and the third processing unit 1202, with repeated parts being not going to be described herein any further.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the information transmitting apparatus 1200 may further include other components or modules, and reference may be made to related techniques for particulars of these components or modules.

Furthermore, for the sake of simplicity, connection relationships between the components or modules or signal profiles thereof are only illustrated in FIG. 12. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

It can be seen from the above embodiment that the network device configures TRP-specific BFDBFR related to at least two TRPs for the terminal equipment, so that the terminal equipment triggers BFR of the cell or does not trigger BFR of the cell or initiates a random access procedure when it detects beam failures on the at least two TRPs and the at least two TRPs are associated with the same cell or when a beam failure is detected on the designated TRP. Hence, unsuccessful TRP-specific BFR may be avoided and service interruption time may be reduced.

### Embodiment of a seventh aspect

The embodiment of this disclosure provides a communication system, and reference may be made to FIG. 1, with contents identical to those in the embodiments of the first to the sixth aspects being not going to be described herein any further.

In some embodiments, the communication system may include a terminal equipment 1400.

In some embodiments, the communication system may include a network device 1300.

The embodiment of this disclosure further provides a network device, which may be, for example, a base station. However, this disclosure is not limited thereto, and it may also be another network device.

FIG. 13 is a schematic diagram of the network device of the embodiment of this disclosure. As shown in FIG. 13, the network device 1300 may include a processor 1310 (such as a central processing unit (CPU)) and a memory 1320, the memory 1320 being coupled to the processor 1310. The memory 1320 may store various data, and furthermore, it may store a program 1330 for information processing, and execute the program 1330 under control of the processor 1310.

For example, the processor 1310 may be configured to execute a program to carry out the information transmitting method as described in the embodiment of the third aspect.

Furthermore, as shown in FIG. 13, the network device 1300 may include a transceiver 1340, and an antenna 1350, etc. Functions of the above components are similar to those in the related art, and shall not be described herein any further. It should be noted that the network device 1300 does not necessarily include all the parts shown in FIG. 13, and furthermore, the network device 1300 may include parts not shown in FIG. 13, and the related art may be referred to.

The embodiment of this disclosure further provides a terminal equipment; however, this disclosure is not limited thereto, and it may also be another equipment.

FIG. 14 is a schematic diagram of the terminal equipment of the embodiment of this disclosure. As shown in FIG. 14, a terminal equipment 1400 may include a processor 1410 and a memory 1420, the memory 1420 storing data and a program and being coupled to the processor 1410. It should be noted that this figure is illustrative only, and other types of structures may also be used, so as to supplement or replace this structure and achieve a telecommunications function or other functions.

For example, the processor 1410 may be configured to execute a program to carry out the beam failure processing method as described in the embodiment of the first or the second aspect.

As shown in FIG. 14, the terminal equipment 1400 may further include a communication module 1430, an input unit 1440, a display 1450, and a power supply 1460, wherein functions of the above components are similar to those in the related art, which shall not be described herein any further. It should be noted that the terminal equipment 1400 does not necessarily include all the parts shown in FIG. 14, and the above components are not necessary. Furthermore, the terminal equipment 1400 may include parts not shown in FIG. 14, and the related art may be referred to.

An embodiment of this disclosure provides a computer readable program, which, when executed in a terminal equipment, causes the terminal equipment to carry out the beam failure processing method as described in the embodiments of the first and second aspects.

An embodiment of this disclosure provides a computer storage medium, including a computer readable program, which causes a terminal equipment to carry out the beam failure processing method as described in the embodiments of the first and second aspects.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.
1. A beam failure processing method, applicable to a terminal equipment, including:
   receiving, by the terminal equipment, configuration information transmitted by a network device, the configuration information configuring TRP-specific beam failure detection (BFD) and/or TRP-specific beam failure recovery (BFR) related to at least two transmission/reception points (TRPs) for the terminal equipment; and
   when a beam failure is detected or beam failure recovery is triggered on the at least two TRPs and the at least two TRPs are associated with the same cell, or when a beam failure is detected or beam failure recovery is triggered on a designated TRP, triggering BFR of a cell or not triggering BFR of a cell or initiate a random access procedure.
2. The method according to supplement 1, wherein when the terminal equipment is configured with cell-specific BFD and/or BFR but no cell-specific beam failure is detected, BFR of the cell is triggered or a random access procedure is initiated on the cell.
3. The method according to supplement 1, wherein when the terminal equipment is not configured with cell-specific BFD and/or BFR, a random access procedure is initiated on the cell.
4. The method according to supplement 1, wherein when carrier aggregation is configured, and when cell-specific BFD and/or BFR is configured on the terminal equipment but no cell-specific beam failure is detected, BFR of the cell is triggered, or a random access procedure is initiated on the cell, the cell being a special cell.
5. The method according to supplement 1, wherein when cell-specific BFD and/or BFR is not configured on the terminal equipment, a random access procedure is initiated on the cell, the cell being a special cell.
6. The method according to supplement 1, wherein when carrier aggregation is configured, and when cell-specific BFD and/or BFR is configured on the terminal equipment but no cell-specific beam failure is detected, BFR of the cell is triggered, the cell being a secondary cell.
7. The method according to supplement 1, wherein when carrier aggregation is configured, and when no cell-specific BFD and/or BFR is/are configured on the terminal equipment, BFR of the cell is not triggered or a random access procedure is initiated on the special cell, the cell being a secondary cell.
8. The method according to supplement 7, wherein when dual connectivity is configured, the special cell is a special cell in a cell group where the secondary cell is located.
9. The method according to any one of supplements 1-6, wherein the triggering BFR of a cell includes:
   generating a media access control (MAC) control element (CE), the MAC CE being used to indicate that no cell-specific beam failure is detected
10. The method according to supplement 7, wherein the triggering BFR of a cell includes:
   generating a media access control (MAC) control element (CE), the MAC CE being used to indicate that a beam failure of the cell is detected or not.
11. The method according to any one of supplements 1-8, wherein when the random access procedure is initiated, a dedicated or common random access resource and/or a dedicated or common random access preamble is/are used.
12. The method according to supplement 11, wherein the dedicated random access resource and/or the dedicated random access preamble is/are cell-specific or BWP-specific or TRP-specific.
13. The method according to any one of supplements 1-12, wherein that the configuration information configures TRP-specific BFD related to the at least two TRPs for the terminal equipment includes in the configuration information, the terminal equipment being configured with at least two BFD-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set.
14. The method according to any one of supplements 1-12, wherein that the configuration information configures TRP-specific BFR related to the at least two TRPs for the terminal equipment includes: in the configuration information, the terminal equipment being configured with at least two NBI-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one NBI-RS set.
15. The method according to any one of supplements 1-14, wherein that the at least two TRPs are associated with the same cell includes that at least two BFD-RS sets are associated with the same cell or at least two NBI-RS sets are associated with the same cell.
16. The method according to supplement 15, wherein that the at least two BFD-RS sets are associated with the same cell includes that PCIs or cell IDs or TCI states or CD-SSBs with which the at least two BFD-RS sets are associated are identical, or the PCIs or cell IDs or TCI states or CD-SSBs with which the control resource pools associated with the at least two BFD-RSs are associated are identical.
17. The method according to supplement 15, wherein that the at least two NBI-RS sets are associated with the same cell includes that PCIs or cell IDs or TCI states or CD-SSBs with which the at least two NBI-RSs are associated are identical, or the PCIs or cell IDs or TCI states or CD-SSBs with which the control resource pools associated with the at least two NBI-RSs are associated are identical.
18. The method according to supplement 15, wherein the detecting beam failure or triggering beam failure recovery on the at least two TRPs includes: detecting beam failure or triggering beam failure recovery simultaneously on the at least two BFD-RS sets, wherein the number of related indices of each of the at least two BFD-RS sets received within a first predetermined time is greater than or equal to a configured threshold.
19. The method according to supplement 15, wherein the detecting beam failure or triggering beam failure recovery on the at least two TRPs includes: detecting the beam failure or triggering beam failure recovery non-simultaneously on the at least two BFD-RS sets, wherein when a beam failure is detected or beam failure recovery is triggered on a latter BFD-RS set, a detected beam failure is not recovered or a triggered BFR is not canceled on a former BFD-RS set where the beam failure is detected or the beam failure recovery is triggered.
20. The method according to supplement 19, wherein that the beam failure is non-simultaneously detected or beam failure recovery is triggered on the at least two BFD-RS sets includes that for a first BFD-RS set and a second BFD-RS set in the at least two BFD-RS sets, the number of related indices of the first BFD-RS set received within first time is greater than or equal to a configured first threshold, and the number of related indices of the second BFD-RS set received within second time is greater than or equal to a configured second threshold, the first time and the second time being different.
21. The method according to any one of supplements 1-14, wherein the detecting a beam failure on the designated TRP includes that the number of related indices of the BFD-RS set to which the designated TRP corresponds received within the second predetermined time is greater than or equal to the configured threshold.
22. The method according to supplement 18 or 20 or 21, wherein the related index is an index of the BFD-RS set or an index of the PCI or cell ID or TCI state, or an index of SSB related to a cell or a control resource pool index.
23. The method according to any one of supplements 1-22, wherein the designated TRP is a TRP of a serving cell of the terminal equipment.
24. The method according to supplement 23, wherein that the designated TRP is a TRP of a serving cell of the terminal equipment includes that a PCI or a cell ID or a TCI state or a CD-SSB or a control resource pool with which the designated TRP is associated is for the serving cell, or a PCI or a cell ID or a TCI state or a CD-SSB associated with a control resource pool associated the designated TRP is for the serving cell.
25. The method according to any one of supplements 1-22, wherein the method further includes:
   receiving, by the terminal equipment, indication information transmitted by the network device, the indication information being used to indicate the designated TRP.
26. The method according to any one of supplements 1-25, wherein the method further includes:
   receiving, by the terminal equipment, DCI transmitted by the network device, the DCI including a toggled NDI; and
   canceling the triggered BFR and/or stopping the ongoing random access procedure when the DCI schedules an HARQ process ID identical to a PUSCH carrying a BFRQ MAC CE.
27. The method according to supplement 26, wherein the BFRQ MAC CE includes information on cell-specific beam failure detection and/or beam failure recovery, and/or TRP-specific beam failure detection and/or beam failure recovery.
28. The method according to supplement 27, wherein the BFRQ MAC CE is the media access control (MAC) control element (CE) generated when the BFR of the cell is triggered.
29. The method according to supplement 26, wherein the DCI is associated with the cell or is associated with an other cell.
30. The method according to supplement 29, wherein in the configuration information, a PCI or a cell ID or a TCI state or a CD-SSB of the other cell is included, the PCI or cell ID or TCI state or CD-SSB being associated with a BFD-RS set, or the PCI or TCI state or CD-SSB being associated with an NBI-RS set, or, a control resource pool index used by other cell is used, the control resource pool index being associated with a BFD-RS set or an NBI-RS set.
31. A beam failure processing method, applicable to a terminal equipment, including:
   receiving, by the terminal equipment, DCI transmitted by a network device, the DCI including a toggled NDI; and
   canceling the triggered BFR and/or stopping the ongoing random access procedure by the terminal equipment when the DCI schedules an HARQ process ID identical to a PUSCH carrying a BFRQ MAC CE.
32. The method according to supplement 31, wherein the BFRQ MAC CE includes information on cell-specific beam failure detection and/or beam failure recovery, and/or TRP-specific beam failure detection and/or beam failure recovery.
33. The method according to supplement 31, wherein the DCI is associated with the cell, or is associated with an other cell.
34. The method according to supplement 31, wherein in the configuration information, a PCI or a cell ID or a TCI state or a CD-SSB of the other cell is included, the PCI or cell ID or TCI state or CD-SSB being associated with a BFD-RS set, or the PCI or TCI state or CD-SSB being associated with an NBI-RS set, or, a control resource pool index used by other cell is used, the control resource pool index being associated with a BFD-RS set or an NBI-RS set.
35. An information transmitting method for, applicable to a network device, the method including:
   transmitting configuration information by the network device to a terminal equipment,
   wherein in the configuration information, the terminal equipment is configured with at least two BFD-RS sets and/or NBI-RS sets, or the configuration information includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set and/or is associated with one NBI-RS set. If the configuration information includes at least two control resource pool indices and one of them is associated with one BFD-RS set and/or is associated with one NBI-RS set, the control resource pool index is further associated with one PCI or one cell ID or one (set of) TCI state(s) or SSB related to one cell.
36. The method according to supplement 35, wherein the configuration information further includes indication information, the indication information being used to indicate a TRP triggering cell-specific BFR and/or initiating a random access procedure when a beam failure occurs or beam failure recovery is triggered.
37. The method according to supplement 35, wherein the method further includes:
   scheduling an HARQ process ID identical to a PUSCH carrying a BFRQ MAC CE by the network device by using a first index of a second cell on a first cell, the second cell being different from the first cell where the terminal equipment triggers cell-specific BFR or initiates a random access procedure.
38. The method according to supplement 37, wherein the BFRQ MAC CE includes information on cell-specific beam failure detection and/or beam failure recovery, and/or TRP-specific beam failure detection and/or beam failure recovery.
39. The method according to supplement 37, wherein the first index is a cell ID or an identifier assigned by the cell for the terminal equipment.
40. A terminal equipment, including a memory and a processor, the memory storing a computer program, wherein the processor is configured to execute the computer program to carry out the beam failure processing method described in any one of supplements 1-34.
41. A beam failure processing apparatus, applicable to a terminal equipment, including:
   a first receiving unit configured to receive configuration information transmitted by a network device, the configuration information configuring TRP-specific beam failure detection (BFD) and/or TRP-specific beam failure recovery (BFR) related to at least two transmission/reception points (TRPs) for the terminal equipment; and
   a first processing unit configured to, when a beam failure is detected or beam failure recovery is triggered on the at least two TRPs and the at least two TRPs are associated with the same cell, or when a beam failure is detected or beam failure recovery is triggered on a designated TRP, trigger BFR of a cell or not to trigger BFR of a cell or initiate a random access procedure.
42. The apparatus according to supplement 41, wherein when the terminal equipment is configured with cell-specific BFD and/or cell-specific BFR but a cell-specific beam failure is not detected, the first processing unit triggers BFR of the cell or initiates a random access procedure on the cell.
43. The apparatus according to supplement 41, wherein when the terminal equipment is not configured with cell-specific BFD and/or cell-specific BFR, the first processing unit initiates a random access procedure on the cell.
44. The apparatus according to supplement 41, wherein when carrier aggregation is configured and the terminal equipment is configured with cell-specific BFD and/or cell-specific BFR but a cell-specific beam failure is not detected, the first processing unit triggers BFR of the cell or initiates a random access procedure on the cell, the cell being a special cell.
45. The apparatus according to supplement 41, wherein when carrier aggregation is configured and the terminal equipment is not configured with cell-specific BFD and/or cell-specific BFR, the first processing unit initiates a random access procedure on the cell, the cell being a special cell.
46. The apparatus according to supplement 41, wherein when carrier aggregation is configured and the terminal equipment is configured with cell-specific BFD and/or cell-specific BFR but a cell-specific beam failure is not detected, the first processing unit triggers BFR of the cell, the cell being a secondary cell.
47. The apparatus according to supplement 41, wherein when carrier aggregation is configured and the terminal equipment is not configured with cell-specific BFD and/or cell-specific BFR, the first processing unit does not trigger BFR of the cell or triggers BFR of the cell or initiates a random access procedure on a special cell, the cell being a secondary cell.
48. The apparatus according to supplement 47, wherein when dual connectivity is configured, the special cell is a special cell of a cell group where the secondary cell is located.
49. The apparatus according to any one of supplements 41-46, wherein the first processing unit is further configured to generate a media access control (MAC) control element (CE), which is used to indicate that no cell-specific beam failure is detected.
50. The apparatus according to supplement 47, wherein the first processing unit is further configured to generate a media access control (MAC) control element (CE), which is used to indicate that a cell-specific beam failure is detected or not.
51. The apparatus according to any one of supplements 41-48, wherein in initiating a random access procedure, the first processing unit uses a dedicated or common random access resource and/or a dedicated or common random access preamble.
52. The apparatus according to supplement 51, wherein the dedicated random access resource and/or the dedicated random access preamble is/are cell-specific or BWP-specific or TRP-specific.
53. The apparatus according to any one of supplements 41-52, wherein that the configuration information configures TRP-specific BFD related to the at least two TRPs for the terminal equipment includes in the configuration information, the terminal equipment being configured with at least two BFD-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set.
54. The apparatus according to any one of supplements 41-52, wherein that the configuration information configures TRP-specific BFR related to the at least two TRPs for the terminal equipment includes: in the configuration information, the terminal equipment being configured with at least two NBI-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one NBI-RS set.
55. The apparatus according to any one of supplements 41-54, wherein that the at least two TRPs are associated with the same cell includes that at least two BFD-RS sets are associated with the same cell or at least two NBI-RS sets are associated with the same cell.
56. The apparatus according to supplement 55, wherein that the at least two BFD-RS sets are associated with the same cell includes that PCIs or cell IDs or TCI states or CD-SSBs with which the at least two BFD-RS sets are associated are identical, or the PCIs or cell IDs or TCI states or CD-SSBs with which the control resource pools associated with the at least two BFD-RSs are associated are identical.
57. The apparatus according to supplement 55, wherein that the at least two NBI-RS sets are associated with the same cell includes that PCIs or cell IDs or TCI states or CD-SSBs with which the at least two NBI-RSs are associated are identical, or the PCIs or cell IDs or TCI states or CD-SSBs with which the control resource pools associated with the at least two NBI-RSs are associated are identical.
58. The apparatus according to supplement 55, wherein the apparatus further includes:
   a first detecting unit, wherein that the first detecting unit detects beam failure or triggers beam failure recovery on the at least two TRPs includes: that the first detecting unit detects beam failure or triggers beam failure recovery simultaneously on the at least two BFD-RS sets, wherein the number of related indices of each of the at least two BFD-RS sets received within a first predetermined time is greater than or equal to a configured threshold.
59. The apparatus according to supplement 55, wherein the apparatus further includes:
   a second detecting unit, wherein that the second detecting unit detects beam failure or triggers beam failure recovery on the at least two TRPs comprises: that the second detecting unit detects the beam failure or triggers beam failure recovery non-simultaneously on the at least two BFD-RS sets, wherein when a beam failure is detected or beam failure recovery is triggered on a latter BFD-RS set, a detected beam failure is not recovered or a triggered BFR is not canceled on a former BFD-RS set where the beam failure is detected or the beam failure recovery is triggered.
60. The apparatus according to supplement 59, wherein that the second detecting unit determines that the beam failure is non-simultaneously detected or beam failure recovery is triggered on the at least two BFD-RS sets includes that for a first BFD-RS set and a second BFD-RS set in the at least two BFD-RS sets, the number of related indices of the first BFD-RS set received within first time is greater than or equal to a configured first threshold, and the number of related indices of the second BFD-RS set received within second time is greater than or equal to a configured second threshold, the first time and the second time being different.
61. The apparatus according to any one of supplements 41-54, wherein the apparatus further includes:
   a third detecting unit, wherein the third detecting unit detects a beam failure on the designated TRP includes that the number of related indices of the BFD-RS set to which the designated TRP corresponds received within the second predetermined time is greater than or equal to the configured threshold.
62. The apparatus according to supplement 58 or 60 or 61, wherein the related index is an index of the BFD-RS set or an index of the PCI or cell ID or TCI state, or an index of SSB related to a cell or a control resource pool index.
63. The apparatus according to any one of supplements 41-62, wherein the designated TRP is a TRP of a serving cell of the terminal equipment.
64. The apparatus according to supplement 63, wherein that the designated TRP is a TRP of a serving cell of the terminal equipment includes that a PCI or a cell ID or a TCI state or a CD-SSB or a control resource pool with which the designated TRP is associated is for the serving cell, or a PCI or a cell ID or a TCI state or a CD-SSB associated with a control resource pool associated the designated TRP is for the serving cell.
65. The apparatus according to any one of supplements 41-62, wherein the apparatus further includes:
   a second receiving unit configured to receive indication information transmitted by the network device, the indication information being used to indicate the designated TRP.
66. The apparatus according to any one of supplements 41-65, wherein the apparatus further includes:
   a third receiving unit configured to receive DCI transmitted by the network device, the DCI including a toggled NDI; and
   a second processing unit configured to cancel the triggered BFR and/or stop the ongoing random access procedure when DCI of the toggled NDI schedules an HARQ process ID identical to a PUSCH carrying a BFRQ MAC CE.
67. The apparatus according to supplement 66, wherein the BFRQ MAC CE includes information on cell-specific beam failure detection and/or beam failure recovery, and/or TRP-specific beam failure detection and/or beam failure recovery.
68. The apparatus according to supplement 67, wherein the BFRQ MAC CE is the media access control (MAC) control element (CE) generated when the BFR of the cell is triggered.
69. The apparatus according to supplement 66, wherein the DCI is associated with the cell or is associated with an other cell.
70. The apparatus according to supplement 69, wherein in the configuration information, a PCI or a cell ID or a TCI state or a CD-SSB of the other cell is included, the PCI or cell ID or TCI state or CD-SSB being associated with a BFD-RS set, or the PCI or TCI state or CD-SSB being associated with an NBI-RS set, or, a control resource pool index used by other cell is used, the control resource pool index being associated with a BFD-RS set or an NBI-RS set.
71. A beam failure processing apparatus, applicable to a terminal equipment, including:
   a fourth receiving unit configured to receive DCI transmitted by a network device, the DCI including a toggled NDI; and
   a fourth processing unit configured to cancel the triggered BFR and/or stop the ongoing random access procedure when the DCI schedules an HARQ process ID identical to a PUSCH carrying a BFRQ MAC CE.
72. The apparatus according to supplement 71, wherein the BFRQ MAC CE includes information on cell-specific beam failure detection and/or beam failure recovery, and/or TRP-specific beam failure detection and/or beam failure recovery.
73. The apparatus according to supplement 71, wherein the DCI is associated with the cell, or is associated with an other cell.
74. The apparatus according to supplement 73, wherein in the configuration information, a PCI or a cell ID or a TCI state or a CD-SSB of the other cell is included, the PCI or cell ID or TCI state or CD-SSB being associated with a BFD-RS set, or the PCI or TCI state or CD-SSB being associated with an NBI-RS set, or, a control resource pool index used by other cell is used, the control resource pool index being associated with a BFD-RS set or an NBI-RS set.
75. An information transmitting apparatus, applicable to a network device, the apparatus including:
   a first transmitting unit configured to transmit configuration information to a terminal equipment,
   wherein in the configuration information, the terminal equipment is configured with at least two BFD-RS sets and/or NBI-RS sets, or the configuration information comprises at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set and/or is associated with one NBI-RS set.
76. The apparatus according to supplement 75, wherein the configuration information further includes indication information, the indication information being used to indicate a TRP triggering cell-specific BFR and/or initiating a random access procedure when a beam failure occurs or beam failure recovery is triggered.
77. The apparatus according to supplement 75, wherein the apparatus further includes:
   a third processing unit configured to schedule an HARQ process ID identical to a PUSCH carrying a BFRQ MAC CE by using a first index of a second cell on a first cell, the second cell being different from the first cell where the terminal equipment triggers cell-specific BFR or initiates a random access procedure.
78. The apparatus according to supplement 77, wherein the BFRQ MAC CE includes information on cell-specific beam failure detection and/or beam failure recovery, and/or TRP-specific beam failure detection and/or beam failure recovery.
79. The apparatus according to supplement 77, wherein the first index is a cell ID or an identifier assigned by the cell for the terminal equipment.
80. A network device, including a memory and a processor, the memory storing a computer program, wherein the processor is configured to execute the computer program to carry out the information transmitting method described in any one of supplements 35-39.
81. A communication system, including:
   the terminal equipment as described in supplement 40 and/or the network device as described in supplement 80.

## Claims

1. A beam failure processing apparatus, applicable to a terminal equipment, the apparatus comprising:
a first receiving unit configured to receive configuration information transmitted by a network device, the configuration information configuring TRP-specific beam failure detection (BFD) and/or TRP-specific beam failure recovery (BFR) related to at least two transmission/reception points (TRPs) for the terminal equipment; and
a first processing unit configured to, when a beam failure is detected or beam failure recovery is triggered on the at least two TRPs and the at least two TRPs are associated with the same cell, or when a beam failure is detected or beam failure recovery is triggered on a designated TRP, trigger BFR of a cell or not to trigger BFR of a cell or initiate a random access procedure.

2. The apparatus according to claim 1, wherein when the terminal equipment is configured with cell-specific BFD and/or cell-specific BFR but a cell-specific beam failure is not detected, the first processing unit triggers BFR of the cell or initiates a random access procedure on the cell.

3. The apparatus according to claim 1, wherein when the terminal equipment is not configured with cell-specific BFD and/or cell-specific BFR, the first processing unit initiates a random access procedure on the cell.

4. The apparatus according to claim 1, wherein when carrier aggregation is configured and the terminal equipment is configured with cell-specific BFD and/or cell-specific BFR but a cell-specific beam failure is not detected, the first processing unit triggers BFR of the cell or initiates a random access procedure on the cell, the cell being a special cell.

5. The apparatus according to claim 1, wherein when carrier aggregation is configured and the terminal equipment is not configured with cell-specific BFD and/or cell-specific BFR, the first processing unit initiates a random access procedure on the cell, the cell being a special cell.

6. The apparatus according to claim 1, wherein when carrier aggregation is configured and the terminal equipment is configured with cell-specific BFD and/or cell-specific BFR but a cell-specific beam failure is not detected, the first processing unit triggers BFR of the cell, the cell being a secondary cell.

7. The apparatus according to claim 1, wherein when carrier aggregation is configured and the terminal equipment is not configured with cell-specific BFD and/or cell-specific BFR, the first processing unit does not trigger BFR of the cell or triggers BFR of the cell or initiates a random access procedure on a special cell, the cell being a secondary cell.

8. The apparatus according to claim 1, wherein that the configuration information configures TRP-specific BFD related to the at least two TRPs for the terminal equipment comprises: in the configuration information, the terminal equipment being configured with at least two BFD-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set.

9. The apparatus according to claim 1, wherein that the configuration information configures TRP-specific BFR related to the at least two TRPs for the terminal equipment comprises: in the configuration information, the terminal equipment being configured with at least two NBI-RS sets, or includes at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one NBI-RS set.

10. The apparatus according to claim 1, wherein that the at least two TRPs are associated with the same cell comprises that at least two BFD-RS sets are associated with the same cell or at least two NBI-RS sets are associated with the same cell.

11. The apparatus according to claim 10, wherein the apparatus further comprises:
a first detecting unit, wherein that the first detecting unit detects beam failure or triggers beam failure recovery on the at least two TRPs comprises: that the first detecting unit detects beam failure or triggers beam failure recovery simultaneously on the at least two BFD-RS sets, wherein the number of related indices of each of the at least two BFD-RS sets received within a first predetermined time is greater than or equal to a configured threshold.

12. The apparatus according to claim 10, wherein the apparatus further comprises:
a second detecting unit, wherein that the second detecting unit detects beam failure or triggers beam failure recovery on the at least two TRPs comprises: that the second detecting unit detects the beam failure or triggers beam failure recovery non-simultaneously on the at least two BFD-RS sets, wherein when a beam failure is detected or beam failure recovery is triggered on a latter BFD-RS set, a detected beam failure is not recovered or a triggered BFR is not cancelled on a former BFD-RS set where the beam failure is detected or the beam failure recovery is triggered.

13. The apparatus according to claim 1, wherein the designated TRP is a TRP of a serving cell of the terminal equipment.

14. The apparatus according to claim 1, wherein the apparatus further comprises:
a second receiving unit configured to receive indication information transmitted by the network device, the indication information being used to indicate the designated TRP.

15. The apparatus according to claim 1, wherein the apparatus further comprises:
a third receiving unit configured to receive DCI transmitted by the network device, the DCI comprising a toggled NDI; and
a second processing unit configured to cancel the triggered BFR and/or stop the ongoing random access procedure when DCI of the toggled NDI schedules an HARQ process ID identical to a PUSCH carrying a BFRQ MAC CE.

16. The apparatus according to claim 15, wherein the DCI is associated with the cell or is associated with an other cell.

17. An information transmitting apparatus, applicable to a network device, the apparatus comprising:
a first transmitting unit configured to transmit configuration information to a terminal equipment,
wherein in the configuration information, the terminal equipment is configured with at least two BFD-RS sets and/or NBI-RS sets, or the configuration information comprises at least two PCIs or at least two cell IDs or at least two (sets of) TCI states or SSBs related to at least two cells or at least two control resource pool indices, wherein one PCI or one cell ID or one (set of) TCI state(s) or SSB related to one cell or one control resource pool index is associated with one BFD-RS set and/or is associated with one NBI-RS set.

18. The apparatus according to claim 17, wherein the configuration information further comprises indication information, the indication information being used to indicate a TRP triggering cell-specific BFR and/or initiating a random access procedure when a beam failure occurs or beam failure recovery is triggered.

19. The apparatus according to claim 17, wherein the apparatus further comprises:
a third processing unit configured to schedule an HARQ process ID identical to a PUSCH carrying a BFRQ MAC CE by using a first index of a second cell on a first cell, the second cell being different from the first cell where the terminal equipment triggers cell-specific BFR or initiates a random access procedure.

20. A communication system, comprising a terminal equipment and a network device;
wherein the terminal equipment receives configuration information transmitted by the network device, and the configuration information configures TRP-specific beam failure detection (BFD) and/or beam failure recovery (BFR) related to at least two transmission/reception points (TRPs) for the terminal equipment, and when a beam failure is detected or beam failure recovery is triggered on the at least two TRPs and the at least two TRPs are associated with the same cell, or a beam failure is detected or beam failure recovery is triggered on a designated TRP, the terminal equipment triggers BFR of a cell or does not trigger BFR of a cell or initiates a random access procedure.
